# EUROPÄISCHE PATENTSCHRIFT

(11) **EP 3 529 430 B1**
(45) Veröffentlichungstag und Bekanntmachung des Hinweises auf die Patenterteilung: **09.12.2020**
(21) Anmeldenummer: 17729757.9
(22) Anmeldetag: 05.01.2017
(51) Int. Cl.: E04B 2/96, E04B 1/24, F16B 7/04, E04B 1/58

(54) **PFOSTEN FÜR EINE PFOSTEN-RIEGEL-KONSTRUKTION**
POST FOR A POST-AND-BEAM CONSTRUCTION
MONTANT POUR UNE CONSTRUCTION À MONTANT ET TRAVERSE

(43) Veröffentlichungstag der Anmeldung: 28.08.2019
(73) Patentinhaber: Jansen AG, 9463 Oberriet (CH)
(72) Erfinder: TRAILOVIC, Dragan, 9443 Widnau (CH)
(74) Vertreter: Münch, Martin Walter
(86) Internationale Anmeldenummer: PCT/CH2017/000003
(87) Internationale Veröffentlichungsnummer: WO 2018/126328

(56) Entgegenhaltungen:
- EP-A1- 0 733 753
- CN-A- 103 225 461
- DE-U1-202011 051 663
- GB-A- 2 176 217
- US-A- 5 661 942

## Beschreibung

### TECHNISCHES GEBIET

Die Erfindung betrifft einen Pfosten für eine Pfosten-Riegel-Konstruktion, sowie ein Verfahren zur Herstellung eines solchen Pfostens.

### STAND DER TECHNIK

Pfosten-Riegel-Verbindungen kommen bei der Erstellung von Tragstrukturen aus Profilelementen zum Einsatz, z.B. bei der Erstellung von Dachkonstruktionen aus Holzbalken, von Lagerregalen aus T-Trägern oder von Tragkonstruktionen für Gebäude-Glasfassaden aus Metallprofilen. Dabei wird die Stirnseite eines Riegels (horizontales Element) mit der Längsseite eines Pfostens (vertikales Element) verbunden. Hierzu sind aus dem Stand der Technik verschiedene Lösungen bekannt.

Bei einer ersten bekannten Pfosten-Riegel-Verbindung wird die Stirnseite des Riegels mit der Seite des Pfostens verschraubt. Eine solche Pfosten-Riegel-Verbindung lässt sich sehr stabil ausführen und ist wieder lösbar, was oftmals gewünscht ist. Sie weist jedoch den Nachteil auf, dass die Stirnseite des Riegels zur Herstellung der Schraubverbindung exakt in der bestimmungsgemässen Position am Pfosten positioniert und bis zur Fertigstellung der Verschraubung gehalten werden muss, was oftmals, insbesondere bei grossen und schweren Bauteilen, schwierig ist. Zudem werden lose Bauteile, wie Schrauben und Muttern, sowie zugehöriges Werkzeug benötigt, was zu Fehlern bei der Material-Bereitstellung am Montageplatz führen kann und die Montage in schwierigen Situationen, wie z.B. auf einem Gerüst, deutlich erschwert.

Aus DE 43 13 895 A1 ist eine Pfosten-Riegel-Verbindung bekannt, bei welcher an der Stirnseite des Riegels eine schwalbenschwanzförmige Tasche und an der Längsseite des Pfostens eine korrespondierende schwalbenschwanzförmige Platte angeordnet ist. Die Verbindung zwischen dem Pfosten und dem Riegel wird dadurch hergestellt, dass die Tasche in vertikaler Richtung über die Platte gefahren wird, wobei ein Formschluss zwischen dem Pfosten und dem Riegel in Schwerkraftrichtung sowie in allen horizontalen Richtungen erzeugt wird. Diese Lösung weist den Vorteil auf, dass sich die schwalbenschwanzförmige Tasche beim Absenken über die schwalbenschanzförmige Platte selbsttätig gegenüber dieser Platte ausrichtet und dass keine zusätzlichen Bauteile oder Werkzeuge zur Herstellung der Verbindung erforderlich sind, wodurch die Montage deutlich erleichtert wird und keine Bauteile vergessen werden können oder verloren gehen können. Nachteilig ist hier jedoch die Tatsache, dass in Richtung entgegen der Schwerkraftrichtung kein Formschluss zwischen dem Pfosten und dem Riegel besteht, so dass die Verbindung bei einem Anheben des Riegels aufgehoben wird und es bei einer Torsionsbelastung des Riegels um seine Längsachse herum, wie sie insbesondere bei Pfosten-Riegel-Verbindungen von Tragkonstruktionen für Glasfassaden auftritt, zu Undefinierten Zuständen mit lokaler Überbeanspruchung der Verbindungsbauteile kommen kann, was dann zu einem Abkippen des Riegels innerhalb der Verbindung führen kann.

Aus DE 196 19 862 A1 ist eine Pfosten-Riegel-Verbindung bekannt, bei welcher an der Längsseite des Pfostens eine Platte mit einem hakenartigen Element angeordnet ist und an der Stirnseite des Riegels eine Vertiefung mit einer nach oben gerichteten Aufnahmeöffnung für das hakenartige Element. Die Verbindung zwischen dem Pfosten und dem Riegel wird dadurch hergestellt, dass der Riegel mit seiner stirnseitigen Vertiefung in horizontaler Richtung über die Platte mit dem hakenartige Element gefahren wird, bis sich die Aufnahmeöffnung über dem hakenartigen Element befindet. Sodann wird der Riegel abgesenkt, wobei das hakenartige Element in die Aufnahmeöffnung eintritt und der Riegel mit den Begrenzungen der Vertiefung auf der Platte aufliegt. Dabei entsteht ein Formschluss zwischen dem Pfosten und dem Riegel in Schwerkraftrichtung sowie in allen horizontalen Richtungen. Diese Lösung weist den Vorteil auf, dass keine zusätzlichen Bauteile oder Werkzeuge zur Herstellung der Verbindung erforderlich sind, wodurch die Montage erleichtert wird, da keine Bauteile vergessen werden können oder verloren gehen können. Nachteilig ist hier jedoch, dass in Richtung entgegen der Schwerkraftrichtung in der bestimmungsgemässen Befestigungssituation kein Formschluss zwischen dem Pfosten und dem Riegel besteht, so dass das hakenartige Element bei einem Anheben des Riegels aus der Aufnahmeöffnung austritt und der durch dieses erzeugte Formschluss aufgehoben wird. Ein weiterer Nachteil dieser Lösung ist darin zu sehen, dass es bei einer Torsionsbelastung des Riegels um seine Längsachse herum zu einem Kippen des Riegels kommen kann.

Aus EP 0967341 A2 ist eine Pfosten-Riegel-Verbindung bekannt, bei welcher an der Längsseite des Pfostens ein Lasteinleitungselement angeschraubt ist und an der Stirnseite des Riegels eine Öffnung mit einer teilweise korrespondierenden Form vorhanden ist, welche zu einer Längsseite des Riegels hin offen ist. Die Verbindung zwischen dem Pfosten und dem Riegel wird dadurch hergestellt, dass der Riegel quer zu seiner Längserstreckung mit der offenen Seite seiner stirnseitigen Öffnung horizontal auf das Lasteinleitungselement geschoben wird, bis dieses vollständig in der stirnseitigen Öffnung angeordnet ist. Sodann wird der Riegel abgesenkt, bis die Begrenzungen der stirnseitigen Öffnungen auf dem Lasteinleitungselement aufliegen. Hierbei entsteht ein Formschluss zwischen dem Pfosten und dem Riegel in Schwerkraftrichtung sowie in den horizontalen Richtungen quer zur Längsrichtung des Riegels. Anschliessend wird von der offenen Seite der stirnseitigen Öffnung des Riegels her eine Sicherungsplatte in einen zwischen der unteren Begrenzung der Öffnung und dem Lasteinleitungselement gebildeten Spalt eingeschoben, welche in der bestimmungsgemässen Befestigungssituation sodann auch einen Formschluss zwischen dem Pfosten und dem Riegel in der Richtung entgegen der Schwerkraftrichtung herstellt. Diese Lösung weist den Vorteil auf, dass nach dem Einschieben der Sicherungsplatte auch ein stabiler Formschluss zwischen dem Pfosten und dem Riegel in Rotationsrichtung um die Längsachse des Riegels vorliegt. Nachteilig ist hier jedoch die Tatsache, dass zur Herstellung der Pfosten-Riegel-Verbindung eine Sicherungsplatte erforderlich ist, welche erst nach der bestimmungsgemässen Anordnung des Riegels am Pfosten installiert werden kann und bis dahin als loses Einzelteil bereitgehalten werden muss, was auch hier zu Fehlern bei der Material-Bereitstellung am Montageplatz führen kann und die Montage in schwierigen Situationen erschwert.

EP 0 733 753 A1 offenbart einen Pfosten für eine Pfosten-Riegel-Konstruktion mit den Merkmalen des Oberbegriffs des Anspruchs 1.

DE 20 2011 051663 U1 offenbart ein Verfahren zur Herstellung eines Pfostens mit den folgenden Merkmalen des Anspruchs 21: Verfahren zur Herstellung eines Pfostens, umfassend die Schritte: a) Bereitstellen eines Pfostens; b) Bereitstellen von mehreren insbesondere identischen Lagerkörpern umfassend einen als Zylinder oder Prisma ausgebildeten Grundkörper mit einer parallel zu seiner Längsachse in den Grundkörper eindringenden oder durch den Grundkörper verlaufenden Lagerbohrung, wobei in Richtung der Längsachse des Grundkörpers gesehen die Umfangsbegrenzungen des Grundkörpers über mindestens ein Drittel der Umfangserstreckung einen Anschlagbereich bilden, c) Bereitstellen von Lagerbolzen für die Befestigung der Lagerkörper an einer Längsseite des Pfostens; d) Einbringen von Befestigungsbohrungen für die Aufnahme der Lagerbolzen in eine Längsseite des Pfostens, insbesondere unter Verwendung einer Bohrschablone, e) Anordnen und Ausrichten der Lagerkörper jeweils derartig an der Längsseite des Pfostens, insbesondere unter Verwendung einer Ausrichtschablone, dass deren Lagerbohrung mit einer der Befestigungsbohrungen fluchtet und diese jeweils eine gewünschte rotatorische Ausrichtung bezüglich der Achse dieser Befestigungsbohrung aufweisen; und f) Befestigen der Lagerkörper in der ausgerichteten Position mittels der Lagerbolzen an der Längsseite des Pfostens jeweils derartig, dass die Lagerbohrung des Lagerkörpers von einem der Lagerbolzen durchsetzt ist und dieser Lagerbolzen in einer der Befestigungsbohrungen in der Längsseite des Pfostens befestigt ist.

Allen zuvor genannten Lösungen gemeinsam ist der Nachteil, dass spezifisch auf das jeweilige Riegelprofil angepasste Beschlagelemente benötigt werden und zudem umfangreiche Bearbeitungsschritte im Bereich des Anschlussendes des Riegels notwendig sind. Entsprechend kosten- und arbeitsintensiv ist die Herstellung der zuvor beschriebenen Pfosten-Riegel-Verbindungen.

### DARSTELLUNG DER ERFINDUNG

Es stellt sich deshalb die Aufgabe, technische Lösungen zur Verfügung zu stellen, welche die zuvor erwähnten Nachteile des Standes der Technik nicht aufweisen oder zumindest teilweise vermeiden.

Diese Aufgabe wird durch die Gegenstände der unabhängigen Patentansprüche 1 und 21 gelöst.

Gemäss diesen betrifft ein erster Aspekt der Erfindung einen Pfosten für eine Pfosten-Riegel-Konstruktion, welcher an einer seiner Längsseiten mehrere an dieser Längsseite befestigte und davon wegstehende Lagerkörper aufweist, für die Lagerung eines an dem Pfosten zu befestigenden Riegels aus einem Hohlprofilmaterial.

Die Lagerkörper sind separat von dem Pfosten ausgebildet und sind jeweils über ein zugeordnetes Lasteinleitungselement formschlüssig in allen Richtungen in einer Ebene, in der sich die Längsseite des Pfostens erstreckt, mit dem Pfosten verbunden, so dass sie entlang dieser Ebene wirkende Traglasten von dem jeweiligen Lagerkörper auf den Pfosten übertragen können.

Die Lasteinleitungselemente und die Lagerkörper sind derartig ausgebildet, dass die Lagerkörper jeweils mit dem ihnen zugeordneten Lasteinleitungselement bei ihrer Montage an der Längsseite des Pfostens wahlweise in verschiedenen Positionen angeordnet werden können, welche Positionen verschiedene Verdrehpositionen des jeweiligen Lagerkörpers in der Ebene dieser Längsseite um eine senkrecht zu dieser Ebene und innerhalb des Lagerkörpers verlaufende Verdrehachse herum darstellen.

Die Lagerkörper sind in ihrer jeweiligen Position formschlüssig und/oder kraftschlüssig gegen ein Verdrehen um die Verdrehachse herum gesichert oder sind in der jeweils gewünschten Position sicherbar.

Ihre Umfangsbegrenzungen bilden, in Richtung der jeweiligen Verdrehachse gesehen, jeweils über mindestens einen Drittel ihrer Umfangserstreckung einen Anschlagbereich zum Anschlagen an die inneren Begrenzungen eines an dem Pfosten zu befestigenden Riegels aus einem Hohlprofilmaterial, wobei in diesem Anschlagbereich der Abstand der Umfangbegrenzungen zur Verdrehachse in einer ersten Umfangsrichtung gesehen zunehmend ist.

Mit anderen Worten gesagt betrifft der erste Aspekt der Erfindung einen Pfosten für eine Pfosten-Riegel-Konstruktion, mit mehreren an einer Längsseite des Pfostens befestigten Lagerkörpern, zur Übertragung von entlang der Ebene der Längsseite wirkenden Traglasten von einem daran zu lagernden Riegel auf den Pfosten. Die Befestigung der Lagerkörper ist dabei derartig realisiert, dass diese bei ihrer Montage an der Längsseite des Pfostens wahlweise in verschiedenen Positionen an der Längsseite des Pfostens angeordnet werden können, welche verschiedenen Verdrehpositionen des jeweiligen Lagerkörpers in der Ebene der Längsseite um eine senkrecht zu dieser Ebene und innerhalb des Lagerkörpers verlaufende Verdrehachse herum entsprechen. Die Lagerkörper sind jeweils in einer dieser Positionen formschlüssig und/oder kraftschlüssig gegen ein Verdrehen um diese Verdrehachse herum gesichert oder sicherbar. Ihre Umfangsbegrenzungen bilden in Richtung der jeweiligen Verdrehachse gesehen jeweils über mindestens einen Drittel der Umfangserstreckung einen Anschlagbereich zum Anschlagen an die inneren Begrenzungen eines mit diesen Lagerkörpern an dem Pfosten zu befestigenden Riegelhohlprofils, wobei in diesem Anschlagbereich der Abstand der Umfangbegrenzungen zur Verdrehachse in einer ersten Umfangsrichtung gesehen zunimmt.

Die Verdrehachsen der Lagerkörper verlaufen in Richtung senkrecht auf die Längsseite des Pfostens gesehen durch die Ecken eines Vielecks, bevorzugterweise eines Dreiecks oder eines Rechtecks. Die Lagerkörper sind dabei derartig positioniert, dass alle Lagerkörper zumindest mit einem Teil ihres Anschlagbereichs über die Begrenzungen dieses Vielecks überstehen.

Auch sind die Lagerkörper derart positioniert, dass alle Lagerkörper einen identischen maximalen Überstand ihres Anschlagbereichs über die Begrenzungen des Vielecks aufweisen. Dabei steht an jeder Seite des Vielecks genau ein Lagerkörper mit dem maximalen Überstand mit seinem Anschlagbereich über diese Seite über.

Der erfindungsgemässe Pfosten kann durch Positionierung der Lagerkörper in verschiedenen Verdrehpositionen um deren Verdrehachsen herum wahlweise für verschiedene Riegelprofile verwendet werden, ohne dass hierfür jeweils spezifische Beschlagselemente zur Verfügung gestellt werden müssten.

In einer ersten bevorzugten Ausführungsform des Pfostens sind die Lagerkörper derartig ausgebildet, dass deren Anschlagbereich eine in Umfangsrichtung gewölbte Anschlagfläche bildet, die sich in der ersten Umfangsrichtung stufenlos zunehmend von der Verdrehachse entfernt. Diese Variante weist den Vorteil auf, dass im Rahmen des Einstellbereichs eine stufenlose Einstellung des Abstands zwischen der Verdrehachse und dem an die inneren Begrenzungen eines an dem Pfosten zu befestigenden Riegels anschlagenden Bereichs der Anschlagfläche möglich ist. Da die Krafteinleitung zu einem Drehmoment um die Verdrehachse herum führt, welches den Lagerkörper in Entlastungsrichtung zu verdrehen versucht, ist es bei dieser Ausführungsform weiter bevorzugt, dass die Lagerkörper formschlüssig gegen ein Verdrehen um die Verdrehachse herum gesichert werden.

In einer zweiten bevorzugten Ausführungsform des Pfostens sind die Lagerkörper derartig ausgebildet, dass der Anschlagbereich mehrere ebene, in der ersten Umfangsrichtung aufeinander folgende Anschlagflächen bildet, deren Abstand zur Verdrehachse in der ersten Umfangsrichtung von Anschlagfläche zu Anschlagfläche stufenweise zunimmt, bevorzugterweise in gleichmässigen Stufen. Diese Ausführungsform ermöglicht eine Einstellung des Abstands zwischen der Verdrehachse und dem an die inneren Begrenzungen eines an dem Pfosten zu befestigenden Riegels anschlagenden Bereichs der Anschlagfläche in definierten Stufen.

Dabei sind bei einer bevorzugten Variante dieser zweiten bevorzugten Ausführungsform die Lagerkörper derartig ausgebildet, dass es bei jeder Anschlagfläche eine Senkrechte zu der Ebene, in der diese Fläche liegt, gibt, welche sowohl durch die Verdrehachse als auch durch diese Anschlagfläche verläuft, und zwar mit Vorteil derart, dass diese Senkrechte zu den beiden umfangsseitigen Begrenzungen der jeweiligen Anschlagfläche einen Abstand grösser als ein Fünftel der Umfangserstreckung dieser Anschlagfläche aufweist. Durch diese Ausgestaltung ergibt sich der Vorteil, dass es bei Verwendung solcher Pfosten in Kombination mit Riegeln mit ebenen inneren Begrenzungen nicht nur zu einem Flächenkontakt zwischen der Anschlagfläche und den inneren Begrenzungen mit verhältnismässig geringen Flächenpressungen kommt, sondern dass es durch die Angrenzung dieser Kontaktfläche an die innere Begrenzung des Riegels auch zu einer formschlüssigen Sicherung des Lagerkörpers gegen ein Verdrehen um dessen Verdrehachse herum kommt, so dass insbesondere in Fällen, in denen es nicht zu vorübergehenden Entlastungen kommen kann, eine kraftschlüssige Sicherung des Lagerkörpers am Pfosten gegen ein Verdrehen ausreichend sein kann.

Natürlich ist es auch vorgesehen, dass die zuvor anlässlich der ersten und der zweiten bevorzugten Ausführungsform des Pfostens beschriebenen Lagerkörpertypen in Kombination miteinander zum Einsatz kommen, für die Lagerung eines oder mehrerer an dem Pfosten zu befestigenden Riegel aus Hohlprofilmaterial.

Die Lagerkörper und insbesondere auch die Lasteinleitungselemente sind bevorzugterweise identisch ausgebildet, so dass sich Vorteile bei der Bereitstellung und Lagerhaltung ergeben.

Sind die Lagerkörper als Zylinder oder als Prismen ausgebildet, was bevorzugt ist, so können sie besonders kostengünstig hergestellt werden, z.B. durch rechtwinkliges Ablängen aus einem entsprechenden Vollprofilmaterial.

In einer weiteren bevorzugten Ausführungsform des Pfostens sind die Lasteinleitungselemente von Befestigungsschrauben bzw. Lagerbolzen gebildet, welche jeweils an der Längsseite des Pfostens befestigt sind und den jeweiligen Lagerkörper zumindest teilweise durchsetzen. Mit Vorteil sind diese Befestigungsschrauben in die Längsseite des Pfostens eingeschraubt. Es ist aber auch vorgesehen, dass diese Befestigungsschrauben bzw. Lagerbolzen von an der Längsseite angeschweissten Bolzen oder Gewindestiften gebildet sind. Auf diese Weise ist eine einfache und sichere Befestigung von als Halbzeugprofilabschnitt bereitstellbaren Lagerkörpern möglich.

Dabei ist es bevorzugt, dass die Befestigungsschrauben bzw. Lagerbolzen zudem auch jeweils einen Formschluss in Richtung senkrecht wegzeigend von der Längsseite des Pfostens zwischen dem Pfosten und dem jeweiligen Lagerkörper erzeugen und diesen so unverlierbar am Pfosten sichern, mit Vorteil jeweils derart, dass die Befestigungsschrauben bzw. Lagerbolzen dabei jeweils eine kraftschlüssige Festlegung des Lagerkörpers in der jeweiligen Position gegen ein Verdrehen um die Verdrehachse herum bewirken.

In einer anderen bevorzugten Ausführungsform des Pfostens sind die Lasteinleitungselemente von Vorsprüngen an den Lagerkörpern gebildet, welche jeweils in zugeordnete Bohrungen in der Längsseite des Pfostens eindringen.

Bevorzugterweise sind diese Vorsprünge einstückig mit den Lagerkörpern ausgebildet, wobei die Lagerkörper dann mit Vorteil als Gussteile aus Metall hergestellt sind.

Mit dieser Ausführungsform lässt sich der Bearbeitungsaufwand am Pfosten und die Anzahl der verwendeten Bauteile reduzieren.

In noch einer weiteren bevorzugten Ausführungsform des Pfostens sind die Lagerkörper jeweils formschlüssig gegen ein Verdrehen um die Verdrehachse herum gesichert, insbesondere mittels eines Positionierstifts oder einer Positionierschraube, welcher oder welche mit einem Abstand zur jeweiligen Verdrehachse in die Längsseite des Pfostens eindringt. Auf diese Weise kann mit einfachen und bewährten Mitteln eine formschlüssige Positionssicherung des Lagerkörpers bewirkt werden.

Insbesondere für den Fall, dass die Lasteinleitungselemente keine formschlüssige Sicherung in Richtung senkrecht wegzeigend von der Längsseite des Pfostens zwischen dem Pfosten und dem jeweiligen Lagerkörper erzeugen, ist es bei dieser Ausführungsform bevorzugt, dass die Lagerkörper jeweils mit einer Positionierschraube formschlüssig gegen ein Verdrehen um die Verdrehachse herum gesichert sind und dabei die Positionierschraube zusätzlich einen Formschluss in Richtung senkrecht wegzeigend von der Längsseite des Pfostens zwischen dem Pfosten und dem Lagerkörper erzeugt.

Diese Variante eignet sich besonders für die zuvor beschriebenen Ausführungsformen des Pfostens, bei denen die Lasteinleitungselemente von Vorsprüngen an den Lagerkörpern gebildet sind, welche jeweils in zugeordnete Bohrungen in der Längsseite des Pfostens eindringen.

Natürlich ist es auch vorgesehen, dass die zuvor beschriebenen Varianten bezüglich der Ausgestaltung der Lasteinleitungselemente in Kombination miteinander zum Einsatz kommen, für die Lagerung eines oder mehrerer an dem Pfosten zu befestigenden Riegel aus Hohlprofilmaterial.

Im Folgenden werden bevorzugte Ausführungsformen eines Lagerkörpers für einen Pfosten gemäss dem zuvor beschriebenen ersten Aspekt der Erfindung beschrieben.

Bevorzugterweise umfasst der Lagerkörper einen als Zylinder oder Prisma ausgebildeten Grundkörper mit einer parallel zu seiner Längsachse in den Grundkörper eindringenden oder durch den Grundkörper hindurch verlaufenden Lagerbohrung.

Dabei bilden in Richtung der Längsachse des Grundkörpers gesehen die Umfangsbegrenzungen des Grundkörpers über mindestens ein Drittel ihrer Umfangserstreckung einen Anschlagbereich zum Anschlagen an die inneren Begrenzungen eines Hohlprofilmaterials, in welchem Bereich der Abstand der Umfangsbegrenzungen zur Achse der Lagerbohrung in einer ersten Umfangsrichtung gesehen zunimmt.

Mit derartigen Lagerkörpern wird die Realisierung des erfindungsgemässen Pfostens gemäss dem ersten Aspekt der Erfindung möglich, mit den bereits zuvor dargelegten Vorteilen.

In einer ersten bevorzugten Ausführungsform ist der Lagerkörper derartig ausgebildet, dass der Anschlagbereich eine in Umfangsrichtung gewölbte Anschlagfläche bildet, die sich in der ersten Umfangsrichtung stufenlos zunehmend von der Verdrehachse entfernt. Diese Variante weist den Vorteil auf, dass im Rahmen des Einstellbereichs eine stufenlose Einstellung des Abstands zwischen der Verdrehachse und einer an die Anschlagfläche angrenzenden inneren Begrenzung eines Hohlprofilmaterials möglich ist.

In einer zweiten bevorzugten Ausführungsform ist der Lagerkörper derartig ausgebildet, dass der Anschlagbereich mehrere ebene, in der ersten Umfangsrichtung aufeinander folgende Anschlagflächen bildet, deren Abstand zur Verdrehachse in der ersten Umfangsrichtung von Anschlagfläche zu Anschlagfläche stufenweise zunimmt, bevorzugterweise in gleichmässigen Stufen. Diese Ausführungsform ermöglicht eine Einstellung des Abstands zwischen der Verdrehachse und einer an die Anschlagfläche angrenzenden inneren Begrenzung eines Hohlprofilmaterials in definierten Stufen.

Bei bevorzugten Varianten, bei denen der Lagerkörper derartig ausgebildet, dass es bei jeder Anschlagfläche eine Senkrechte zu der Ebene dieser Fläche gibt, welche sowohl durch die Verdrehachse als auch durch diese Anschlagfläche verläuft, ergibt sich der Vorteil, dass es bei Angrenzung der jeweiligen Anschlagfläche an eine ebene innere Begrenzung eines Hohlprofilmaterials auch zu einer formschlüssigen Sicherung des Lagerkörpers gegen ein Verdrehen um dessen Verdrehachse herum kommt.

Um eine gute Verdrehsicherung zu gewährleisten, ist es bei dieser Ausführungsform bevorzugt, dass die zuvor erwähnte Senkrechte einen Abstand zu den beiden umfangsseitigen Begrenzungen der jeweiligen Anschlagfläche von jeweils grösser als einem Fünftel der Umfangserstreckung dieser Anschlagfläche aufweist.

In noch einer weiteren bevorzugten Ausführungsform umfasst der Lagerkörper mehrere identische Positionssicherungsbohrungen, welche parallel zu der Längsachse des Grundkörpers in den Grundkörper eindringen bzw. diesen durchdringen. Dabei sind die Zentren der Positionssicherungsbohrungen auf einer Kreisbahn um die Achse der Lagerbohrung herum angeordnet, bevorzugterweise mit einem gleichmässigen Abstand untereinander. Hierdurch ergibt sich der Vorteil, dass es zur Sicherung des Lagerkörpers in verschiedenen Verdrehpositionen um seine Verdrehachse herum an der Längsseite eines Pfostens mittels eines Positionierstifts oder einer Positionierschraube lediglich einer einzigen Sicherungsbohrung in der Längsseite des Pfostens bedarf.

Ein zweiter Aspekt der Erfindung betrifft eine Pfosten-Riegel-Verbindung zwischen einem Pfosten gemäss dem ersten Aspekt der Erfindung und einem bevorzugterweise rechtwinklig an dessen Längsseite anstossenden Riegel aus einem Hohlprofilmaterial, wobei die Lagerkörper des Pfostens axial in das Hohlprofilmaterial des Riegels eintreten und mit ihren Anschlagbereichen an den inneren Begrenzungen des Hohlprofilmaterials anliegen.

Die Bildung derartiger Pfosten-Riegel-Verbindungen stellt die bestimmungsgemässe Verwendung der Pfosten gemäss dem ersten Aspekt der Erfindung dar.

Bevorzugterweise ist der Riegel der Pfosten-Riegel-Verbindung aus einem vieleckigen geschlossenen Rohrmaterial (Hohlprofilmaterial) mit im Wesentlichen gleichmässiger Wandstärke gebildet. Die Innenseiten der Rohrwandungen bilden dabei die inneren Begrenzungen des Hohlprofilmaterials. Derartige Hohlprofilmaterialien eignen sich besonders gut zur Bildung der Riegel.

Dabei ist es weiter bevorzugt, dass jeder Seitenwand des vieleckigen Rohrquerschnitts genau ein Lagerkörper zugeordnet ist, der mit seinem Anschlagbereich ausschliesslich an die Innenseite dieses Seitenwandbereichs angrenzt. Auf diese Weise lässt sich insbesondere bei drei- und viereckigen Rohrmaterialien eine exakte Positionierung und eine gute Tragfähigkeit der Verbindung in allen Richtungen quer zur Riegellängsrichtung erzielen.

Ist dabei bei allen Lagerkörpern der Abstand zwischen der jeweiligen Verdrehachse und der Innenseite der jeweiligen Seitenwand identisch, was bevorzugt ist, so können erfindungsgemässe Pfosten zum Einsatz kommen, an denen je nach Positionierung der Tragkörper verschiedene Riegelprofile mit im Querschnitt gesehen identischen Aussenabmessungen aber unterschiedlichen Wandstärken in derselben Position befestigt werden können. Hierdurch ergibt sich der Vorteil, dass für unterschiedlich tragfähige Riegelprofile jeweils immer die gleichen erfindungsgemässen Pfosten verwendet werden können, was die Lagerhaltung deutlich vereinfacht.

Sind bei den letztgenannten Varianten die Lagerkörper jeweils im Bereich der Ecken des vieleckigen Rohrquerschnitts angeordnet, was bevorzugt ist, so ergibt sich in einer der beiden Verdrehrichtungen um die Längsachse des Riegels herum eine besonders torsionssteife Verbindung zwischen Pfosten und Riegel, was insbesondere bei Verwendung der erfindungsgemässen Pfosten-Riegel-Verbindung innerhalb von Tragstrukturen für Gebäude-Glasfassaden wesentliche Vorteile ergibt.

In einer weiteren bevorzugten Ausführungsform umfasst die Pfosten-Riegel-Verbindung eine zusammen mit einem der Lagerkörper an der Längsseite des Pfostens befestigte und innerhalb der inneren Begrenzungen des Hohlprofilmaterials angeordnete Rastbolzenanordnung mit einem Rastbolzen, welcher in eine nach aussen hin offene Radialbohrung im Hohlprofilmaterials des Riegels eingerastet ist, so dass sich eine formschlüssige Sicherung der Pfosten-Riegel-Verbindung gegen ein unbeabsichtigtes Aufheben der Verbindung durch axiales Wegbewegen des Riegels vom Pfosten ergibt.

Im Folgenden werden bevorzugte Materialsets beschrieben, zur Bildung einer Pfosten-Riegel-Verbindung gemäss dem zweiten Aspekt der Erfindung durch Kombination des jeweiligen Materialsets mit einem Pfosten und mit Befestigungsschrauben für im Materialset enthaltene Lagerkörper.

Die Materialsets umfassen jeweils mehrere vieleckige, bevorzugterweise rechteckige Metallhohlprofile (zur Bildung von Riegeln) mit einem ringförmigen Querschnitt und gleichmässiger Wandstärke, wobei die Metallhohlprofile im Querschnitt gesehen identische Aussenabmessungen aber stufenweise unterschiedliche Wandstärken aufweisen.

Des Weiteren umfassen die Materialsets mehrere identische Lagerkörper.

Bei einem ersten Materialset sind diese Lagerkörper jeweils derartig ausgebildet, dass deren Anschlagbereich mehrere ebene, in der ersten Umfangsrichtung aufeinander folgende Anschlagflächen bildet, deren Abstand zur Achse der Lagerbohrung in der ersten Umfangsrichtung von Anschlagfläche zu Anschlagfläche stufenweise zunimmt. Dabei entspricht jeweils die Stufung der Abstände der in der ersten Umfangsrichtung aufeinander folgenden Anschlagflächen zu der Achse der Lagerbohrung des Lagerkörpers zum Teil oder vollständig der Stufung der Wandstärken der Metallhohlprofile, oder umfasst zum Teil oder vollständig eine entsprechende Stufung.

Bei einem zweiten Materialset sind die Lagerkörper jeweils derartig ausgebildet, dass der Anschlagbereich eine in Umfangsrichtung gewölbte Anschlagfläche bildet, die sich in der ersten Umfangsrichtung stufenlos zunehmend von der Achse der Lagerbohrung entfernt. Dabei ist der Unterschied zwischen der grössten Entfernung der Anschlagfläche von der Achse der Lagerbohrung und deren kleinster Entfernung von der Achse der Lagerbohrung zumindest grösser als ein Teil der Wandstärkestufen der Metallhohlprofile zusammengenommen.

Die Materialsets stellen Systemlösungen dar, mit denen unter Verwendung von identischen Lagerkörpern und eines einzigen standardisierten Bohrbilds für die Befestigung der Lagerkörper Pfosten-Riegel-Konstruktionen mit Riegelprofilen, welche sich in ihren Wandstärke und damit in der Tragfähigkeit unterscheiden, bereitgestellt werden können.

Bei bevorzugten Ausführungsformen der Materialsets umfassen die Lagerkörper mehrere identische Positionssicherungsbohrungen, welche parallel zu der Längsachse des Grundkörpers in den Grundkörper eindringen oder den Grundkörper durchdringen, wobei die Zentren der Positionssicherungsbohrungen auf einer Kreisbahn um die Achse der Lagerbohrung herum angeordnet sind, insbesondere mit einem gleichmässigen Abstand untereinander.

Bei dem ersten Materialset ist es dabei von Vorteil, dass die Lagerkörper derartig ausgebildet sind, dass die Zentren der Positionssicherungsbohrungen derartig auf einer Kreisbahn um die Achse der Lagerbohrung herum angeordnet sind, dass zwischen den in der ersten Umfangsrichtung aufeinander folgenden mehreren Anschlagflächen die gleichen Drehwinkelabstände um die Achse der Lagerbohrung herum liegen wie zwischen in der ersten Umfangsrichtung aufeinanderfolgenden Positionssicherungsbohrungen.

Bei dem zweiten Materialset ist es dabei von Vorteil, dass die Lagerkörper derartig ausgebildet sind, dass die Zentren der Positionssicherungsbohrungen derartig auf einer Kreisbahn um die Achse der Lagerbohrung herum angeordnet sind, dass sich zwischen Umfangspositionen an der gewölbten Anschlagfläche des Lagerkörpers, zwischen denen die gleichen Drehwinkelabstände um die Achse der Lagerbohrung herum liegen wie zwischen den Positionssicherungsbohrungen, Unterschiede im jeweiligen Abstand zu der Achse der Lagerbohrung ergeben, welche zum Teil oder vollständig der Stufung der Wandstärken der Metallhohlprofile entsprechen oder eine entsprechende Stufung zum Teil oder vollständig umfassen.

Durch diese Ausgestaltungen lässt sich im Zusammenspiel mit jeweils einer einzigen zugeordneten Positionierbohrung pro Lagerkörper am Pfosten und unter Verwendung eines Positionierstifts oder einer Positionierschraube bei der Montage der Lagerkörper gezielt und ohne weitere Hilfsmittel deren bestimmungsgemässe Lage einstellen und formschlüssig sichern.

Ein dritter Aspekt der Erfindung betrifft eine Gebäudefassade mit einer Tragkonstruktion aus Pfosten und Riegeln, welche eine oder mehrere Pfosten-Riegel-Verbindungen gemäss dem zweiten Aspekt der Erfindung aufweist. Bevorzugterweise ist diese Gebäudefassade eine Gebäude-Glasfassade. Bei solchen Gebäudefassaden treten die Vorteile der Erfindung besonders deutlich zu Tage.

Ein vierter Aspekt der Erfindung betrifft ein Verfahren zur Herstellung eines Pfostens gemäss dem ersten Aspekt der Erfindung.

Dabei werden mehrere bevorzugterweise identische Lagerkörper der zuvor beschriebenen bevorzugten Art, welche jeweils eine durch den Grundkörper des Lagerkörpers verlaufende Lagerbohrung aufweisen, mittels zugeordneten Lagerbolzen in Befestigungsbohrungen an einer Längsseite eines Pfostens befestigt.

Das Einbringen der Befestigungsbohrungen für die Aufnahme der Lagerbolzen in die Längsseite des Pfostens erfolgt, bevorzugterweise unter Verwendung einer Bohrschablone, derart, dass die Zentren der Befestigungsbohrungen in Richtung senkrecht auf die Längsseite des Pfostens gesehen durch die Ecken eines Vielecks verlaufen, mit Vorteil eines Dreiecks oder eines Rechtecks.

Das anschliessende Anordnen und Ausrichten der Lagerkörper an der Längsseite des Pfostens erfolgt jeweils derartig, bevorzugterweise unter Verwendung einer Ausrichtschablone, dass deren Lagerbohrung jeweils mit der zugeordneten Befestigungsbohrung fluchtet und der jeweilige Lagerkörper jeweils eine gewünschte rotatorische Ausrichtung bezüglich der Achse dieser Befestigungsbohrung aufweist, dass alle Lagerkörper zumindest mit einem Teil ihres Anschlagbereichs über die Begrenzungen des zuvor erwähnten Vielecks überstehen und dass alle Lagerkörper einen identischen maximalen Überstand ihres Anschlagbereichs über die Begrenzungen des Vielecks aufweisen, wobei an jeder Seite des Vielecks genau ein Lagerkörper mit dem maximalen Überstand mit seinem Anschlagbereich über diese Seite übersteht.

In der so ausgerichteten Position werden die Lagerkörper mittels der Lagerbolzen an der Längsseite des Pfostens jeweils derartig befestigt, dass die Lagerbohrung des Lagerkörpers von dem zugeordneten Lagerbolzen durchsetzt ist und dieser Lagerbolzen in der zugeordneten Befestigungsbohrung in der Längsseite des Pfostens befestigt ist, z.B. mittels einer Gewindeverbindung.

Mit dem erfindungsgemässen Verfahren lassen sich auf einfache Weise Pfosten gemäss dem ersten Aspekt der Erfindung herstellen.

In einer ersten bevorzugten Ausführungsform des Verfahrens werden Lagerkörper verwendet, bei denen der Anschlagbereich mehrere ebene, in der ersten Umfangsrichtung aufeinander folgende Anschlagflächen bildet, deren Abstand zur Achse der Lagerbohrung in der ersten Umfangsrichtung von Anschlagfläche zu Anschlagfläche stufenweise zunimmt und bei denen es bei jeder Anschlagfläche eine Senkrechte dieser Fläche gibt, welche sowohl durch die Achse der Lagerbohrung als auch durch diese Anschlagfläche verläuft. Bevorzugterweise weist diese Senkrechte zu den beiden umfangsseitigen Begrenzungen der jeweiligen Anschlagfläche einen Abstand grösser als ein Fünftel der Umfangsserstreckung dieser Anschlagfläche auf. Die Lagerkörper werden bei dieser Ausführungsform des Verfahrens ausschliesslich kraftschlüssig jeweils mittels des sie durchsetzenden Lagerbolzens gegen ein Verdrehen um die Achse dieses Lagerbolzens gesichert, indem sie mit dem Lagerbolzen gegen die Längsseite des Pfostens gepresst werden. Dieses Verfahren ist besonders effizient, weil aufgrund der Verwendung der speziell ausgebildeten Lagerkörper, welche bei bestimmungsgemässer Verwendung des Pfostens durch Angrenzung an die innere Begrenzung des Riegelhohlprofils automatisch formschlüssig gegen ein Verdrehen um die Achse ihrer Lagerbohrung gesichert werden, auf eine aufwendige separate formschlüssige Sicherung der Position des jeweiligen Lagerkörpers verzichtet werden kann.

In einer zweiten bevorzugten Ausführungsform des Verfahrens werden Lagerkörper verwendet, bei denen der Anschlagbereich eine in Umfangsrichtung gewölbte Anschlagfläche bildet, die sich in der ersten Umfangsrichtung stufenlos zunehmend von der Achse der Lagerbohrung entfernt. Die Lagerkörper werden bei dieser Ausführungsform des Verfahrens jeweils formschlüssig gegen ein Verdrehen um die Achse des sie durchsetzenden Lagerbolzens gesichert werden, insbesondere mittels eines Positionierstift oder einer Positionierschraube, welcher oder welche parallel und mit einem Abstand zu der Achse des Lagerbolzens in den Lagerkörper eindringt oder diesen durchdringt und in die Längsseite des Pfostens eindringt.

Bevorzugterweise wird dabei der Positionierstift oder die Positionierschraube jeweils in eine Positionssicherungsbohrung in der Längsseite des Pfostens angeordnet, welche zuvor, bevorzugterweise beim Einbringen der Befestigungsbohrungen für die Lagerbolzen, mit Vorteil unter Verwendung einer Bohrschablone welche auch für das Einbringen der Befestigungsbohrungen verwendet wird, in die Längsseite des Pfostens eingebracht wurde.

### KURZE BESCHREIBUNG DER ZEICHNUNGEN

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine perspektivische Draufsicht auf eine erfindungsgemässe Pfosten-Riegel-Verbindung;
Fig. 2 die Darstellung aus Fig. 1 mit den unsichtbaren Konturkanten gestrichelt eingezeichnet;
Fig. 3 eine Seitenansicht der Pfosten-Riegel-Verbindung aus Fig. 1 mit den unsichtbaren Konturkanten gestrichelt eingezeichnet;
Fig. 4 einen Schnitt entlang der Linie A-A in Fig. 3;
Fig. 5 einen Schnitt entlang der Linie B-B in Fig. 3;
die Figuren 6 bis 8 Darstellungen wie die Figuren 3 bis 5 einer Variante der Pfosten-Riegel-Verbindung;
Fig. 9a eine Draufsicht auf einen der Lagerkörper der Pfosten-Riegel-Verbindung aus den Figuren 1 bis 8;
Fig. 9b eine Seitenansicht des Lagerkörpers aus Fig. 9a mit den unsichtbaren Konturkanten gestrichelt eingezeichnet;
Fig. 9c eine Darstellung wie Fig. 9a einer Ausführungsvariante des Lagerkörpers;
Fig. 9d eine Darstellung wie 9b der Ausführungsvariante des Lagerkörpers;
Fig. 10a eine Draufsicht auf einen weiteren Lagerkörper;
Fig. 10b eine Seitenansicht des Lagerkörpers aus Fig. 10a mit den unsichtbaren Konturkanten gestrichelt eingezeichnet;
Fig. 10c eine Darstellung wie Fig. 10a einer Ausführungsvariante des Lagerkörpers;
Fig. 10d eine Darstellung wie 10b der Ausführungsvariante des Lagerkörpers;
die Figuren 11a bis 11e Darstellungen wie Fig. 4 mit Riegeln verschiedener Wandstärken; und
die Figuren 12a bis 12e Darstellungen wie die Figuren 11a bis 11e, jedoch mit Lagerkörpern gemäss den Figuren 10a und 10b.

### WEGE ZUR AUSFÜHRUNG DER ERFINDUNG

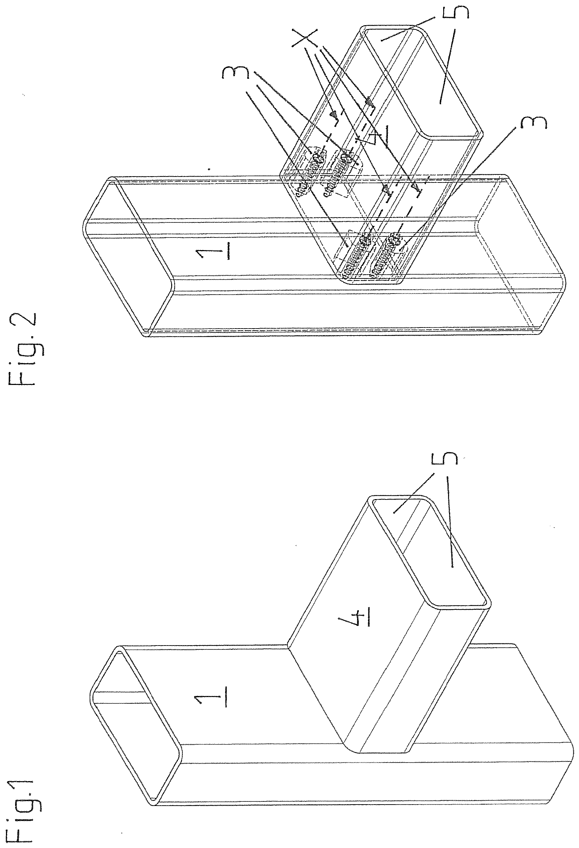

Fig. 1 zeigt eine rechtwinklige erfindungsgemässe Pfosten-Riegel-Verbindung einer Tragkonstruktion für eine Gebäude-Glasfassade in einer perspektivischen Draufsicht. Es sind jeweils lediglich Teilstücke des Pfostens 1 und des Riegels 4, mit welchen die Pfosten-Riegel-Verbindung gebildet ist, gezeigt. Wie zu erkennen ist, sind sowohl der Pfosten 1 als auch der Riegel 4 aus einem rechteckigen Stahlrohrprofilmaterial mit gleichmässiger Wandstärke gebildet, wobei die Querschnitte bei Pfosten 1 und Riegel 4 identisch sind.

Fig. 2 zeigt die gleiche Darstellung wie Fig. 1, jedoch mit den unsichtbaren Konturkanten gestrichelt eingezeichnet.

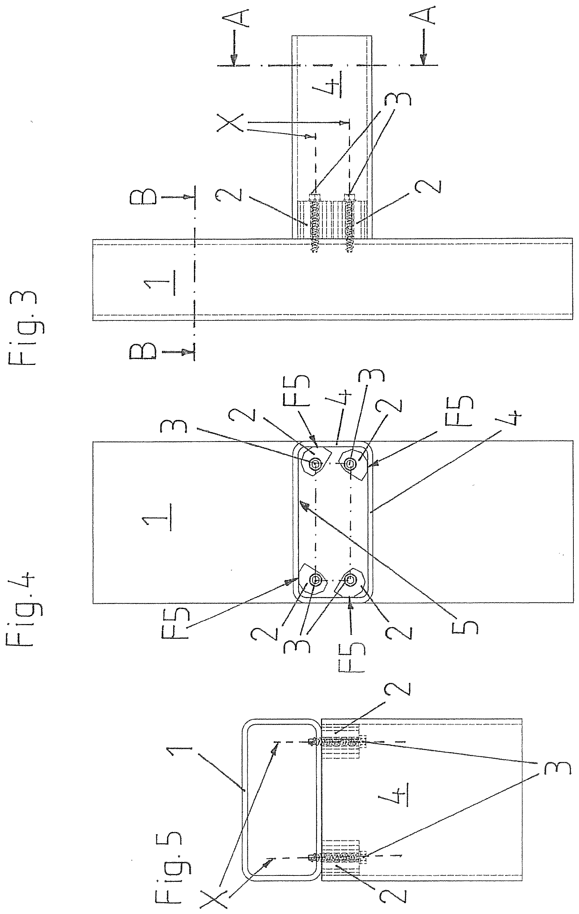

Wie in Zusammenschau mit den Figuren 3, 4 und 5 zu ersehen ist, von denen Fig. 3 eine Seitenansicht der Pfosten-Riegel-Verbindung mit den unsichtbaren Konturkanten gestrichelt dargestellt zeigt, Fig. 4 einen Schnitt entlang der Linie A-A in Fig. 3 zeigt und Fig. 5 einen Schnitt entlang der Linie B-B in Fig. 3 zeigt, ebenfalls mit den unsichtbaren Konturkanten gestrichelt dargestellt, sind an der Längsseite des Pfostens 1 in dem Bereich, in welchem der Riegel 4 an diesen anstösst, vier Lagerkörper 2 mit Befestigungsschrauben 3 befestigt, welche von der Längsseite wegstehen. Sie treten dabei axial in das Riegelprofil 4 ein und liegen mit an ihrem Umfang gebildeten Anschlagflächen F5 an den Innenseiten 5 des Riegelprofils 4 an.

Wie insbesondere aus einer Zusammenschau der Figuren 2 und 4 erkennbar ist, verlaufen die Längsachsen X der Befestigungsschrauben 3 in Richtung senkrecht auf die Längsseite des Pfostens 1 gesehen durch die Ecken eines Rechtecks (mit strichpunktierten Linien in Fig. 4 angedeutet), und die Lagerkörper 2 sind derartig positioniert, dass sie mit ihren Anschlagflächen über die Begrenzungen dieses Rechtecks überstehen. Jeder Seitenwand des rechteckigen Stahlrohrprofils des Riegels 4 ist dabei genau ein Lagerkörper 2 zugeordnet, der ausschliesslich an die Innenseite 5 dieser Seitenwand angrenzt. Die Lagerkörper 2 sind im Bereich der Ecken des rechteckigen Rohrquerschnitts des Riegels 4 angeordnet und bei allen Lagerkörpern 2 ist der Abstand zwischen der Längsachse X seiner Befestigungsschraube 3 und der Innenseite 5 der jeweiligen Seitenwand, an welchen dieser mit seiner Anschlagfläche F5 angrenzt, identisch.

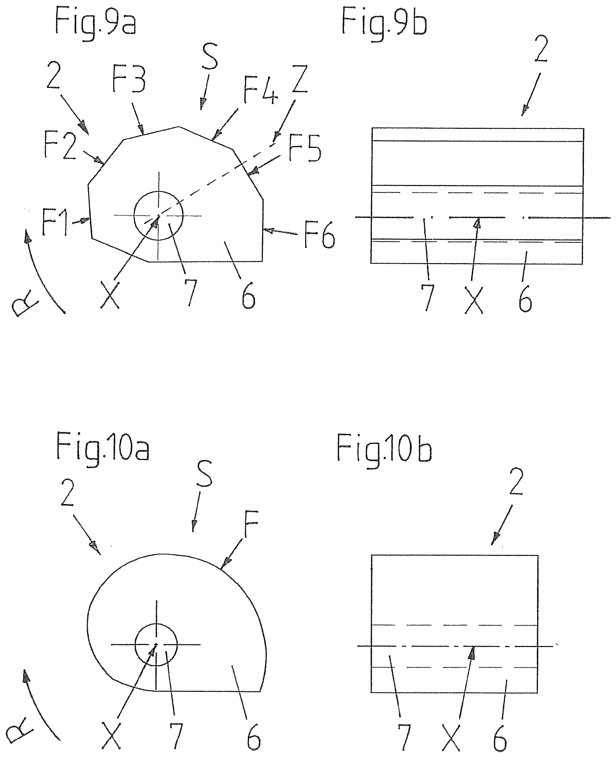

Wie aus den Figuren 9a und 9b ersichtlich ist, von denen Fig. 9a eine Draufsicht auf einen der Lagerkörper 2 zeigt und Fig. 9b eine Seitenansicht des Lagerkörpers 2 mit den unsichtbaren Konturkanten gestrichelt dargestellt, weist der Lagerkörper 2 einen als Prisma ausgebildeten Grundkörper 6 mit einer parallel zu seiner Längsachse durch den Grundkörper 6 verlaufenden Lagerbohrung 7 für die Befestigungsschraube 3 auf.

In Richtung der Längsachse des Grundkörpers 6 gesehen bilden die Umfangsbegrenzungen des Grundkörpers 6 über etwa drei Viertel der Umfangserstreckung einen von mehrere ebene, in Umfangsrichtung aufeinander folgenden Anschlagflächen F1-F6 gebildeten Anschlagbereich S, in welchem der Abstand der aufeinander folgenden Anschlagflächen F1-F6 zur Achse X der Lagerbohrung 7 in einer ersten Umfangsrichtung R von Anschlagfläche zu Anschlagfläche stufenweise zunimmt.

Dabei sind die Anschlagflächen F1-F6 derartig am Umfang des Lagerkörpers 2 angeordnet, dass es bei jeder Anschlagfläche F1-F6 eine Senkrechte Z zu der Ebene, in welcher dieser Fläche F1; F2; F3; F4; F5; F6 liegt, gibt, welche sowohl durch die Achse X der Lagerbohrung 7 als auch durch diese Anschlagfläche F1; F2; F3; F4; F5; F6 verläuft. Der Übersichtlichkeit halber ist diese Senkrechte Z in Fig. 9a nur beispielhaft für die Anschlagfläche F5 eingezeichnet.

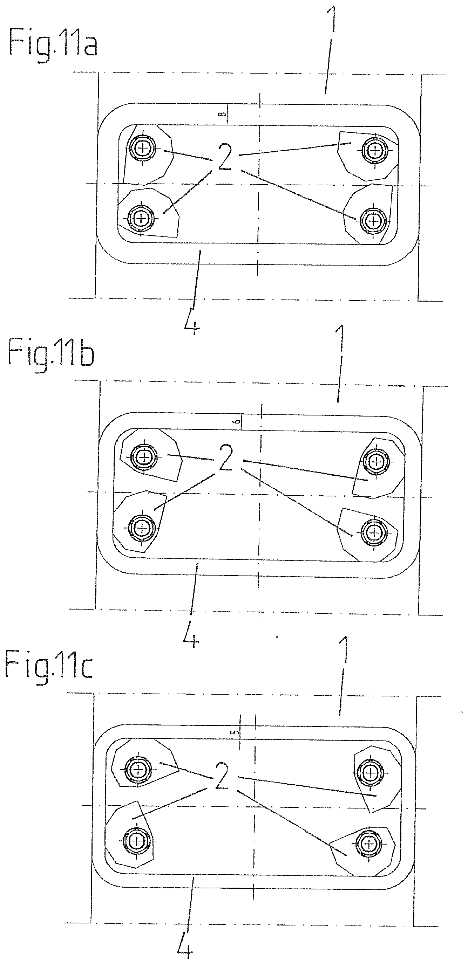

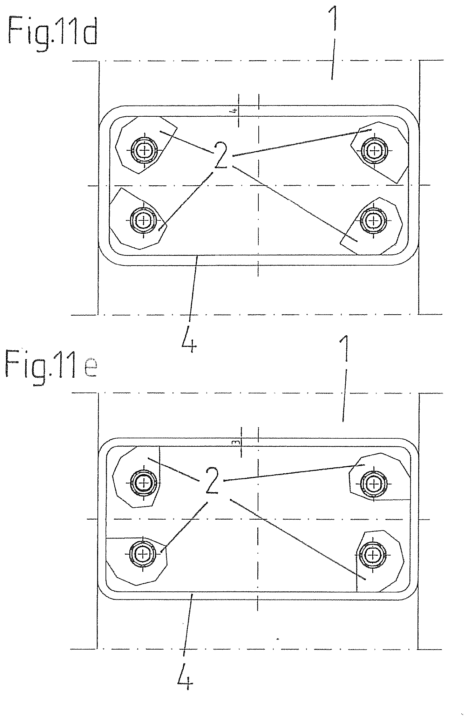

Wie in Zusammenschau mit den Figuren 11a-11e erkennbar ist, welche jeweils eine Darstellung wie Fig. 4 aber mit Riegeln 4 verschiedener Wandstärken zeigen, können die Lagerkörper 2 aufgrund ihrer zuvor beschriebenen Ausgestaltung bei ihrer Montage mit der Befestigungsschraube 3 an der Längsseite des Pfostens 1 wahlweise in verschiedenen Positionen an der Längsseite des Pfostens 1 angeordnet werden, welche Positionen verschiedenen Verdrehpositionen des jeweiligen Lagerkörpers 2 in der Ebene der Längsseite des Pfostens 1 um die Längsachse X seiner Lagerbohrung 7 herum entsprechen.

Werden die vier Lagerkörper 2 derartig an der Längsseite des Pfostens 1 positioniert, dass alle Lagerkörper 2 jeweils mit der gleichen Anschlagfläche F1; F2; F3; F4; F5; F6 an die ihnen jeweils zugeordnete Innenwand 5 des Riegelprofils 4 angrenzen, so lassen sich mit den Lagerkörpern 2 verschiedene Riegelprofile 4 mit identischen Aussenabmessungen aber unterschiedlichen Wandstärken in einer identischen Position an dem Pfosten 1 befestigen, wie dies in den Figuren 11a-11e dargestellt ist.

Hierzu ist die Stufung der Abstände der in der ersten Umfangsrichtung R aufeinander folgenden Anschlagflächen F1-F6 der Anschlagbereiche S der Lagerkörper 2 zu den Achsen X ihrer Lagerbohrungen 7 so gewählt, dass sie der Stufung der Wandstärken der verschiedenen Riegelprofile 4 entspricht. Die gezeigten verschiedenen Riegelprofile 4 und die entsprechend darauf abgestimmten Lagerkörper 2 bilden ein Materialset.

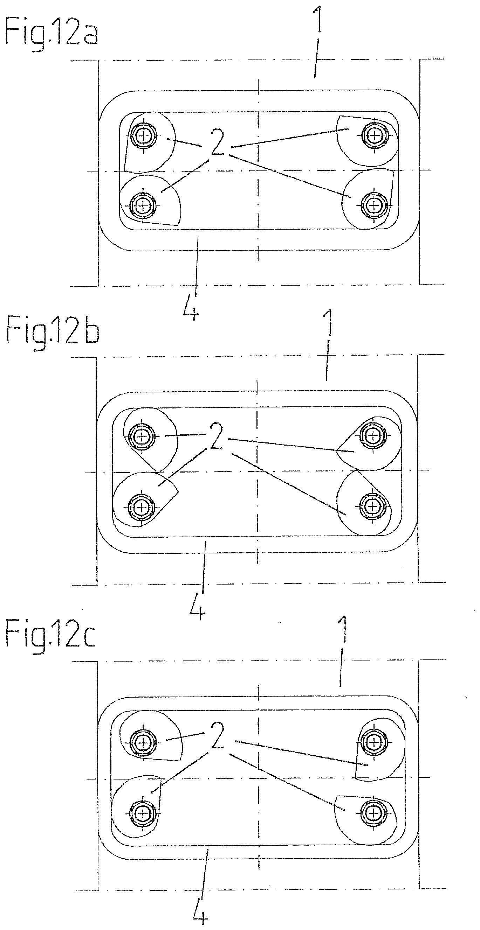

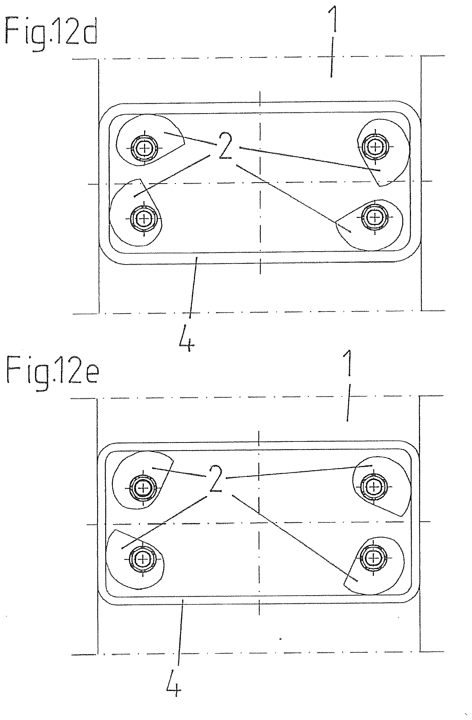

Die Figuren 12a bis 12e zeigen Darstellungen wie die Figuren 11a bis 11e, jedoch mit Lagerkörpern 2, welche keine abgestufte Anschlagfläche aufweisen. Der Aufbau dieser Lagerkörper 2 ist aus den Figuren 10a und 10b ersichtlich, von denen Fig. 10a eine Draufsicht auf einen der Lagerkörper 2 zeigt und Fig. 10b eine Seitenansicht des Lagerkörpers 2 mit den unsichtbaren Konturkanten gestrichelt dargestellt.

Wie zu erkennen ist, weist dieser Lagerkörper 2 einen als Zylinder ausgebildeten Grundkörper 6 mit einer parallel zu seiner Längsachse durch den Grundkörper 6 verlaufenden Lagerbohrung 7 für die Befestigungsschraube 3 auf.

In Richtung der Längsachse des Grundkörpers 6 gesehen bilden die Umfangsbegrenzungen des Grundkörpers 6 über etwa drei Viertel der Umfangserstreckung einen von einer in Umfangsrichtung gewölbten Anschlagfläche F gebildeten Anschlagbereich S, in welchem der Abstand der Umfangsbegrenzungen zur Achse X der Lagerbohrung 7 in einer ersten Umfangsrichtung R gesehen zunimmt.

Wie aus einer Zusammenschau der Figuren 12a-12e erkennbar ist, welche analog zu den Figuren 11a-11e Darstellungen mit Riegelprofilen 4 mit identischen Aussenabmessungen aber verschiedenen Wandstärken zeigen, können auch hier die Lagerkörper 2 bei ihrer Montage mit der Befestigungsschraube 3 an der Längsseite des Pfostens 1 wahlweise in verschiedenen Positionen an der Längsseite des Pfostens 1 angeordnet werden, welche Positionen verschiedenen Verdrehpositionen des jeweiligen Lagerkörpers 2 in der Ebene der Längsseite um die Längsachse X seiner Lagerbohrung 7 herum entsprechen.

Hierzu ist der durch die gewölbte Anschlagfläche F bereitgestellte Veränderungsbereich der Entfernung zwischen der Achse X der Lagerbohrung 7 und der Anschlagfläche F so gewählt, dass er den Bereich der Wandstärkenstufung der Riegelprofile 4 umfasst. Auch hier bilden die gezeigten verschiedenen Riegelprofile 4 und die entsprechend darauf abgestimmten Lagerkörper 2 ein Materialset.

Werden die vier Lagerkörper 2 derartig an der Längsseite des Pfostens 1 positioniert, dass alle Lagerkörper 2 jeweils mit der gleichen Umfangsposition ihrer gewölbten Anschlagfläche F an die ihnen jeweils zugeordnete Innenwand 5 des Riegelprofils 4 angrenzen, so lassen sich mit den Lagerkörpern 2 verschiedene Riegelprofile 4 mit identischen Aussenabmessungen bei unterschiedlichen Wandstärken in einer identischen Position an dem Pfosten 1 befestigen, wie dies in den Figuren 12a-12e dargestellt ist.

Bei den in den Figuren 11a-11e und 12a-12e dargestellten Pfosten-Riegel-Verbindungen sind die Lagerkörper 2 jeweils mittels der Befestigungsschraube 3 an die Längsseite des Pfostens 1 angepresst und so in ihrer jeweiligen Position kraftschlüssig gegen ein Verdrehen um die Längsachse X herum gesichert.

Bei den in den Figuren 11a-11e dargestellten Pfosten-Riegel-Verbindungen ergibt sich zusätzlich durch die Angrenzung der jeweiligen ebenen Anschlagfläche F1; F2; F3; F4; F5; F6 an die jeweils ebenfalls ebene Innenwand 5 des Riegelprofils 4 eine formschlüssige Sicherung der Lagerkörper 2 in ihrer jeweiligen Position gegen ein Verdrehen um die Längsachse X herum. Dies aufgrund der spezifischen Anordnung der Anschlagflächen F1-F6 am Umfang des Lagerkörpers 2 derart, dass es bei jeder Anschlagfläche F1-F6 eine Senkrechte Z zu der Ebene, in welcher dieser Fläche F1; F2; F3; F4; F5; F6 sich erstreckt, gibt, welche sowohl durch die Achse X der Lagerbohrung 7 als auch durch diese Anschlagfläche F1; F2; F3; F4; F5; F6 verläuft.

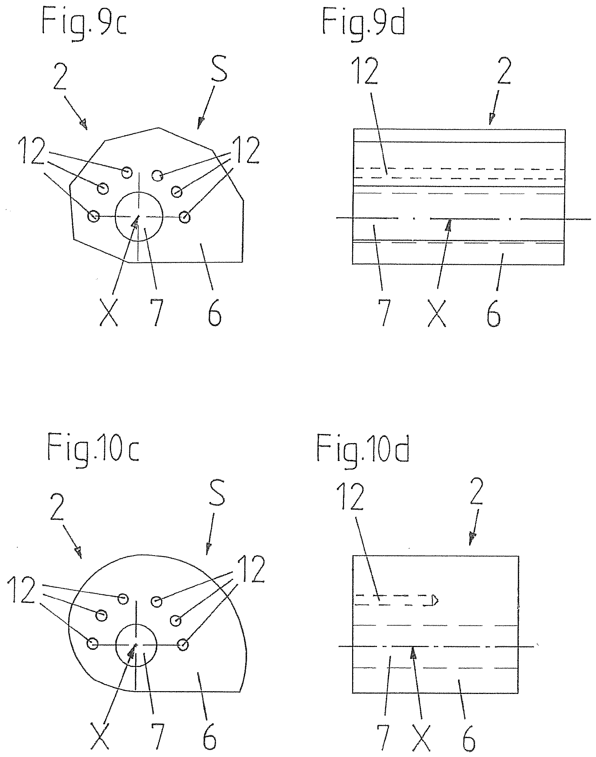

Die Figuren 10c und 10d zeigen einen Lagerkörper 2 der zum Einsatz kommen kann, wenn auch bei den in den Figuren 12a-12e dargestellten Pfosten-Riegel-Verbindungen eine formschlüssige Sicherung der Lagerkörper 2 in ihrer jeweiligen Position gegen ein Verdrehen um die Längsachse X herum realisiert werden soll.

Der hier gezeigte Lagerkörper 2 unterscheidet sich von dem in den Figuren 10a und 10b gezeigten lediglich dadurch, dass er sechs identische Positionssicherungsbohrungen 12 aufweist, welche parallel zu der Längsachse des Grundkörpers 6 bzw. zu der Längsachse X der Lagerbohrung 7 in den Grundkörper 6 des Lagerkörpers 2 eindringen. Die Zentren der Positionssicherungsbohrungen 12 sind dabei auf einer Kreisbahn um die Achse X der Lagerbohrung 7 herum angeordnet, derart, dass sich zwischen Umfangspositionen an der Anschlagfläche F des Lagerkörpers 2, zwischen denen die gleichen Drehwinkelabstände um die Achse X der Lagerbohrung 7 herum liegen wie zwischen den Positionssicherungsbohrungen 12, eine Stufung bezüglich deren Abstand zu der Achse X der Lagerbohrung 7 ergibt, welche der Stufung der Wandstärken der Riegelprofile 4 entspricht.

Durch diese Ausgestaltung des Lagerkörpers 2 lässt sich im Zusammenspiel mit einer einzigen zugeordneten Positionierbohrung am Pfosten 1 unter Verwendung eines Positionierstifts oder einer Positionierschraube bei der Montage des Lagerkörpers 2 gezielt und ohne weitere Hilfsmittel dessen bestimmungsgemässe Position einstellen und formschlüssig sichern.

Die Figuren 9c und 9d zeigen einen Lagerkörper 2 der zum Einsatz kommen kann, wenn auch bei den in den Figuren 11a-11e dargestellten Pfosten-Riegel-Verbindungen die zuvor beschriebene Positionierungserleichterung und/oder eine zusätzliche formschlüssige Sicherung der Lagerkörper 2 in ihrer jeweiligen Position gegen ein Verdrehen um die Längsachse X herum realisiert werden soll. Der in diesen Figuren gezeigte Lagerkörper 2 unterscheidet sich von dem in den Figuren 9a und 9b gezeigten lediglich dadurch, dass er sechs identische Positionssicherungsbohrungen 12 aufweist, welche parallel zu der Längsachse des Grundkörpers 6 bzw. der Längsachse X der Lagerbohrung 7 durch den Grundkörper 6 des Lagerkörpers 2 hindurchführen.

Die Zentren der Positionssicherungsbohrungen sind dabei auf einer Kreisbahn um die Achse X der Lagerbohrung 7 herum angeordnet, derart, dass zwischen den in der ersten Umfangsrichtung R aufeinander folgenden Anschlagflächen F1-F6 des Anschlagbereichs S des Lagerkörpers 2 die gleichen Drehwinkelabstände um die Achse X der Lagerbohrung 7 herum liegen wie zwischen den Positionssicherungsbohrungen 12.

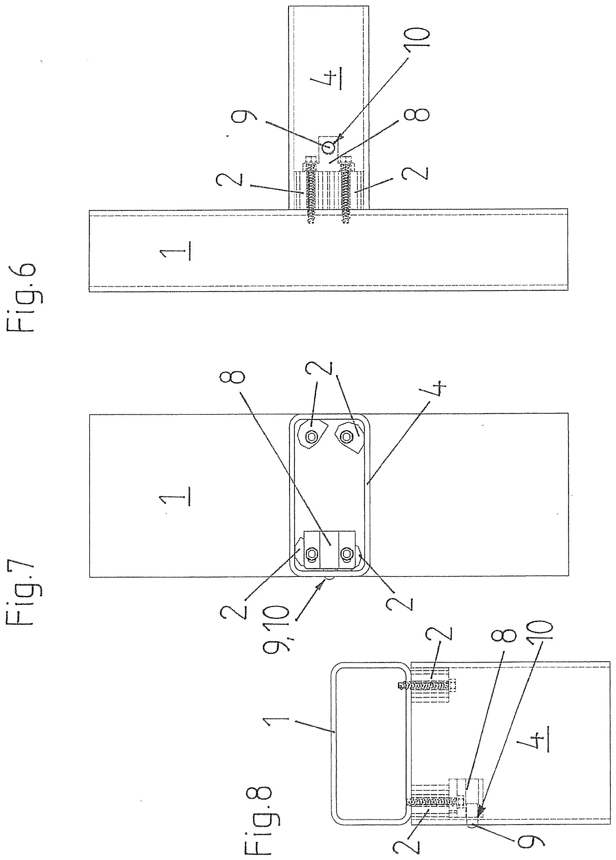

Die Figuren 6-8 zeigen Darstellungen wie die Figuren 3-5 einer Variante der Pfosten-Riegel-Verbindung, welche sich von der in den Figuren 3-5 beschriebenen lediglich dadurch unterscheidet, dass sie zusätzlich eine gemeinsam mit zweien der Lagerkörper 2 an der Längsseite des Pfostens 1 befestigte Rastbolzenanordnung 8, 9 aufweist, zur formschlüssigen Sicherung der Pfosten-Riegel-Verbindung gegen ein unbeabsichtigtes Aufheben der Verbindung durch axiales Wegbewegen des Riegels 4 vom Pfosten 1. Die Rastbolzenanordnung 8, 9 ist innerhalb der inneren Begrenzungen des Riegelprofils 4 angeordnet und weist einen Grundkörper 8 mit einem Rastbolzen 9 auf, welcher in eine nach aussen hin offene Radialbohrung 10 im Hohlprofilmaterial des Riegels 4 eingerastet ist.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der nun folgenden Ansprüche ausgeführt werden kann.

## Patentansprüche

1. Pfosten (1) für eine Pfosten-Riegel-Konstruktion, umfassend mehrere an einer Längsseite des Pfostens (1) befestigte und von dieser wegstehende Lagerkörper (2),
wobei die Lagerkörper (2) separat von dem Pfosten (1) ausgebildet sind und jeweils über ein zugeordnetes Lasteinleitungselement (3) formschlüssig in allen Richtungen in einer Ebene, in der sich die Längsseite des Pfostens (1) erstreckt, mit dem Pfosten (1) verbunden sind, zur Übertragung von entlang dieser Ebene wirkenden Traglasten von dem jeweiligen Lagerkörper (2) auf den Pfosten (1),
wobei die Lasteinleitungselemente (3) jeweils derartig ausgebildet sind, dass die Lagerkörper (2) jeweils mit dem ihnen zugeordneten Lasteinleitungselement (3) bei ihrer Montage an der Längsseite des Pfostens (1) wahlweise in verschiedenen Positionen an der Längsseite des Pfostens (1) angeordnet werden können, welche Positionen verschiedene Verdrehpositionen des jeweiligen Lagerkörpers (2) in der Ebene der Längsseite um eine senkrecht zu dieser Ebene und innerhalb des Lagerkörpers (2) verlaufende Verdrehachse (X) herum darstellen,
wobei die Lagerkörper (2) jeweils in einer dieser Positionen formschlüssig und/oder kraftschlüssig gegen ein Verdrehen um die Verdrehachse (X) herum gesichert oder sicherbar sind,
und wobei in Richtung der jeweiligen Verdrehachse (X) gesehen die Umfangsbegrenzungen der Lagerkörper (2) jeweils über mindestens ein Drittel der Umfangserstreckung einen Anschlagbereich (S) zum Anschlagen an die inneren Begrenzungen (5) eines an dem Pfosten (1) zu befestigenden Riegelhohlprofils (4) bilden, wobei in diesem Anschlagbereich (S) der Abstand der Umfangbegrenzungen zur Verdrehachse (X) in einer ersten Umfangsrichtung (R) gesehen zunimmt, **dadurch gekennzeichnet,**
**dass** die Verdrehachsen (X) der Lagerkörper (2) in Richtung senkrecht auf die Längsseite des Pfostens (1) gesehen durch die Ecken eines Vielecks verlaufen, insbesondere eines Dreiecks oder eines Rechtecks, und wobei die Lagerkörper (2) derartig positioniert sind, dass alle Lagerkörper (2) zumindest mit einem Teil ihres Anschlagbereichs (S) über die Begrenzungen dieses Vielecks überstehen,
wobei alle Lagerkörper (2) einen identischen maximalen Überstand ihres Anschlagbereichs (S) über die Begrenzungen des Vielecks aufweisen
und wobei an jeder Seite des Vielecks genau ein Lagerkörper (2) mit dem maximalen Überstand mit seinem Anschlagbereich (S) über diese Seite übersteht.

2. Pfosten (1) nach Anspruch 1, wobei die Lagerkörper (2) derartig ausgebildet sind, dass der Anschlagbereich (S) eine in Umfangsrichtung gewölbte Anschlagfläche (F) bildet, die sich in der ersten Umfangsrichtung (R) stufenlos zunehmend von der Verdrehachse (X) entfernt.

3. Pfosten (1) nach Anspruch 1, wobei die Lagerkörper (2) derartig ausgebildet sind, dass der Anschlagbereich (S) mehrere ebene, in der ersten Umfangsrichtung (R) aufeinander folgende Anschlagflächen (F1-F6) bildet, deren Abstand zur Verdrehachse (X) in der ersten Umfangsrichtung (R) von Anschlagfläche zu Anschlagfläche stufenweise zunimmt, insbesondere in gleichmässigen Stufen.

4. Pfosten (1) nach Anspruch 3, wobei die Lagerkörper (2) derartig ausgebildet sind, dass es bei jeder Anschlagfläche (F1-F6) eine Senkrechte (Z) zu der Ebene dieser Fläche (F1; F2; F3; F4; F5; F6) gibt, welche sowohl durch die Verdrehachse (X) als auch durch diese Anschlagfläche (F1; F2; F3; F4; F5; F6) verläuft, insbesondere derart, dass diese Senkrechte (Z) zu den beiden umfangsmässigen Begrenzungen der jeweiligen Anschlagfläche (F1; F2; F3; F4; F5; F6) einen Abstand grösser als ein Fünftel der Umfangserstreckung dieser Anschlagfläche (F1; F2; F3; F4; F5; F6) aufweist.

5. Pfosten (1) nach einem der vorangehenden Ansprüche, wobei die Lagerkörper (2) identisch sind, und insbesondere, wobei die Lasteinleitungselemente (3) identisch sind.

6. Pfosten (1) nach einem der vorangehenden Ansprüche, wobei die Lagerkörper (2) als Zylinder oder als Prismen ausgebildet sind, und insbesondere, wobei diese durch Ablängen aus einem entsprechenden Vollprofilmaterial hergestellt sind.

7. Pfosten (1) nach einem der vorangehenden Ansprüche, wobei die Lasteinleitungselemente (3) von Befestigungsschrauben (3) gebildet sind, welche jeweils an der Längsseite des Pfostens (1) befestigt sind, insbesondere in die Längsseite des Pfostens (1) eingeschraubt sind, und den jeweiligen Lagerkörper (2) zumindest teilweise durchsetzen.

8. Pfosten (1) nach Anspruch 7, wobei die Befestigungsschrauben (3) jeweils einen Formschluss in Richtung senkrecht wegzeigend von der Längsseite des Pfostens (1) zwischen dem Pfosten (1) und dem jeweiligen Lagerkörper (2) erzeugen.

9. Pfosten (1) nach Anspruch 8, wobei die Befestigungsschrauben (3) jeweils eine kraftschlüssige Festlegung des Lagerkörpers (2) in der jeweiligen Position gegen ein Verdrehen um die Verdrehachse (X) herum bewirken.

10. Pfosten nach einem der Ansprüche 1 bis 6, wobei die Lasteinleitungselemente von Vorsprüngen an den Lagerkörpern gebildet sind, welche jeweils in zugeordnete Bohrungen in der Längsseite des Pfostens eindringen.

11. Pfosten nach Anspruch 10, wobei die Vorsprünge einstückig mit den Lagerkörpern ausgebildet sind, und insbesondere, wobei die Lagerkörper als Gussteile aus Metall hergestellt sind.

12. Pfosten nach einem der vorangehenden Ansprüche, wobei die Lagerkörper jeweils formschlüssig gegen ein Verdrehen um die Verdrehachse herum gesichert sind, insbesondere mittels eines Positionierstifts oder einer Positionierschraube, welcher oder welche mit einem Abstand zur jeweiligen Verdrehachse in die Längsseite des Pfostens eindringt.

13. Pfosten nach Anspruch 12, wobei die Lagerkörper jeweils mit einer Positionierschraube formschlüssig gegen ein Verdrehen um die Verdrehachse herum gesichert sind und wobei die Positionierschraube einen Formschluss in Richtung senkrecht wegzeigend von der Längsseite des Pfostens zwischen dem Pfosten und dem Lagerkörper erzeugt.

14. Pfosten-Riegel-Verbindung zwischen einem Pfosten (1) nach einem der Ansprüche 1 bis 13 und einem insbesondere rechtwinklig an dessen Längsseite anstossenden Riegel (4) aus einem Hohlprofilmaterial, wobei die Lagerkörper (2) des Pfostens (1) axial in das Hohlprofilmaterial des Riegels (4) eintreten und mit ihren Anschlagbereichen (S) an den inneren Begrenzungen (5) des Hohlprofilmaterials anliegen.

15. Pfosten-Riegel-Verbindung nach Anspruch 14, wobei der Riegel (4) aus einem vieleckigen geschlossenen Rohrmaterial mit im Wesentlichen gleichmässiger Wandstärke gebildet ist und wobei die Innenseiten der Rohrwandungen die inneren Begrenzungen (5) des Hohlprofilmaterials bilden.

16. Pfosten-Riegel-Verbindung nach Anspruch 15, wobei jeder Seitenwand des vieleckigen Rohrquerschnitts genau ein Lagerkörper (2) zugeordnet ist, der mit seinem Anschlagbereich (S) ausschliesslich an die Innenseite (5) dieses Seitenwandbereichs angrenzt.

17. Pfosten-Riegel-Verbindung nach Anspruch 16, wobei bei allen Lagerkörpern (2) der Abstand zwischen der jeweiligen Verdrehachse (X) und der Innenseite (5) der jeweiligen Seitenwand identisch ist.

18. Pfosten-Riegel-Verbindung nach einem der Ansprüche 16 bis 17, wobei die Lagerkörper (2) im Bereich der Ecken des vieleckigen Rohrquerschnitts angeordnet sind.

19. Pfosten-Riegel-Verbindung nach einem der Ansprüche 14 bis 18, des Weiteren umfassend eine zusammen mit mindestens einem der Lagerkörper (2) an der Längsseite des Pfostens (1) befestigte und innerhalb der inneren Begrenzungen des Hohlprofilmaterials angeordnete Rastbolzenanordnung (8, 9) mit einem Rastbolzen (9), welcher in eine nach aussen hin offene Radialbohrung (10) im Hohlprofilmaterials des Riegels (4) eingerastet ist, zur formschlüssigen Sicherung der Pfosten-Riegel-Verbindung gegen ein unbeabsichtigtes Aufheben der Verbindung durch axiales Wegbewegen des Riegels (4) vom Pfosten (1).

20. Gebäudefassade, insbesondere Gebäude-Glasfassade, mit einer Tragkonstruktion aus Pfosten (1) und Riegeln (4), umfassend eine Pfosten-Riegel-Verbindung nach einem der Ansprüche 14 bis 19.

21. Verfahren zur Herstellung eines Pfostens (1) nach einem der Ansprüche 1 bis 13, umfassend die Schritte:
a) Bereitstellen eines Pfostens (1);
b) Bereitstellen von mehreren insbesondere identischen Lagerkörpern (2) umfassend einen als Zylinder oder Prisma ausgebildeten Grundkörper (6) mit einer parallel zu seiner Längsachse in den Grundkörper (6) eindringenden oder durch den Grundkörper (6) verlaufenden Lagerbohrung (7),
wobei in Richtung der Längsachse des Grundkörpers (6) gesehen die Umfangsbegrenzungen des Grundkörpers (6) über mindestens ein Drittel der Umfangserstreckung einen Anschlagbereich (S) bilden, in welchem der Abstand der Umfangsbegrenzungen zur Achse (X) der Lagerbohrung (7) in einer ersten Umfangsrichtung (R) gesehen zunimmt,
c) Bereitstellen von Lagerbolzen (3) für die Befestigung der Lagerkörper (2) an einer Längsseite des Pfostens (1);
d) Einbringen von Befestigungsbohrungen für die Aufnahme der Lagerbolzen (3) in eine Längsseite des Pfostens (1), insbesondere unter Verwendung einer Bohrschablone, derart, dass die Zentren der Befestigungsbohrungen in Richtung senkrecht auf die Längsseite des Pfostens (1) gesehen durch die Ecken eines Vielecks verlaufen, insbesondere eines Dreiecks oder eines Rechtecks;
e) Anordnen und Ausrichten der Lagerkörper (2) jeweils derartig an der Längsseite des Pfostens (1), insbesondere unter Verwendung einer Ausrichtschablone, dass deren Lagerbohrung (7) mit einer der Befestigungsbohrungen fluchtet, dass diese jeweils eine gewünschte rotatorische Ausrichtung bezüglich der Achse dieser Befestigungsbohrung aufweisen, dass alle Lagerkörper (2) zumindest mit einem Teil ihres Anschlagbereichs (S) über die Begrenzungen des zuvor erwähnten Vielecks überstehen und dass alle Lagerkörper (2) einen identischen maximalen Überstand ihres Anschlagbereichs (S) über die Begrenzungen des Vielecks aufweisen, wobei an jeder Seite des Vielecks genau ein Lagerkörper (2) mit dem maximalen Überstand mit seinem Anschlagbereich (S) über diese Seite übersteht, und
f) Befestigen der Lagerkörper (2) in der ausgerichteten Position mittels der Lagerbolzen (3) an der Längsseite des Pfostens (1) jeweils derartig, dass die Lagerbohrung (7) des Lagerkörpers (2) von einem der Lagerbolzen (3) durchsetzt ist und dieser Lagerbolzen (3) in einer der Befestigungsbohrungen in der Längsseite des Pfostens (1) befestigt ist.

22. Verfahren nach Anspruch 21,
wobei Lagerkörper (2) bereitgestellt werden, welche umfassen einen als Zylinder oder Prisma ausgebildeten Grundkörper (6) mit einer parallel zu seiner Längsachse in den Grundkörper (6) eindringenden oder durch den Grundkörper (6) verlaufenden Lagerbohrung (7),
wobei in Richtung der Längsachse des Grundkörpers (6) gesehen die Umfangsbegrenzungen des Grundkörpers (6) über mindestens ein Drittel der Umfangserstreckung einen Anschlagbereich (S) bilden, in welchem der Abstand der Umfangsbegrenzungen zur Achse (X) der Lagerbohrung (7) in einer ersten Umfangsrichtung (R) gesehen zunimmt,
wobei der Lagerkörper (2) derartig ausgebildet ist, dass der Anschlagbereich (S) mehrere ebene, in der ersten Umfangsrichtung (R) aufeinander folgende Anschlagflächen (F1-F6) bildet, deren Abstand zur Achse (X) der Lagerbohrung in der ersten Umfangsrichtung (R) von Anschlagfläche zu Anschlagfläche stufenweise zunimmt, insbesondere in gleichmässigen Stufen,
und wobei der Lagerkörper (2) derartig ausgebildet ist, dass es bei jeder Anschlagfläche (F1-F6) eine Senkrechte (Z) zu dieser Fläche (F1; F2; F3; F4; F5; F6) gibt, welche sowohl durch die Achse (X) der Lagerbohrung (7) als auch durch diese Anschlagfläche (F1; F2; F3; F4; F5; F6) verläuft, insbesondere derart, dass diese Senkrechte (Z) zu den beiden umfangsmässigen Begrenzungen der jeweiligen Anschlagfläche (F1; F2; F3; F4; F5; F6) einen Abstand grösser als ein Fünftel der Umfangsserstreckung dieser Anschlagfläche (F1; F2; F3; F4; F5; F6) aufweist,
und insbesondere, wobei die Lagerkörper (2) ausschliesslich kraftschlüssig mittels des sie durchsetzenden Lagerbolzens (3) gegen ein Verdrehen um die Achse (X) dieses Lagerbolzens (3) gesichert werden.

23. Verfahren nach Anspruch 21,
wobei Lagerkörper (2) bereitgestellt werden, welche umfassen einen als Zylinder oder Prisma ausgebildeten Grundkörper (6) mit einer parallel zu seiner Längsachse in den Grundkörper (6) eindringenden oder durch den Grundkörper (6) verlaufenden Lagerbohrung (7),
wobei in Richtung der Längsachse des Grundkörpers (6) gesehen die Umfangsbegrenzungen des Grundkörpers (6) über mindestens ein Drittel der Umfangserstreckung einen Anschlagbereich (S) bilden, in welchem der Abstand der Umfangsbegrenzungen zur Achse (X) der Lagerbohrung (7) in einer ersten Umfangsrichtung (R) gesehen zunimmt,
und wobei der Lagerkörper (2) derartig ausgebildet ist, dass der Anschlagbereich (S) eine in Umfangsrichtung gewölbte Anschlagfläche (F) bildet, die sich in der ersten Umfangsrichtung (R) stufenlos zunehmend von der Achse (X) der Lagerbohrung (7) entfernt,
und insbesondere, wobei die Lagerkörper (2) jeweils formschlüssig gegen ein Verdrehen um die Achse (X) des sie durchsetzenden Lagerbolzens (3) gesichert werden, insbesondere mittels eines Positionierstifts oder einer Positionierschraube, welcher oder welche parallel zu der Achse (X) des Lagerbolzens (3) in den Lagerkörper (2) eindringt oder diesen durchdringt und in die Längsseite des Pfostens (1) eindringt.

24. Verfahren nach Anspruch 23, wobei der Positionierstift oder die Positionierschraube jeweils in eine Positionssicherungsbohrung in der Längsseite des Pfostens (1) angeordnet wird, welche zuvor, insbesondere beim Einbringen der Befestigungsbohrungen für die Lagerbolzen (3), insbesondere unter Verwendung einer Bohrschablone welche auch für das Einbringen der Befestigungsbohrungen verwendet wird, in die Längsseite des Pfostens (1) eingebracht wurde.

## Claims

1. Post (1) for a post and beam construction comprising a plurality of bearing bodies (2) attached to and projecting from a longitudinal side of the post (1),
wherein the bearing bodies (2) are formed separately from the post (1) and are each connected to the post (1) via an associated load introduction element (3) in a form-locking manner in all directions in a plane in which the longitudinal side of the post (1) extends, for the transmission of bearing loads acting along this plane from the respective bearing body (2) to the post (1),
wherein the load introduction elements (3) are each designed in such a way that the bearing bodies (2) can be arranged with the load introduction element (3) associated with them in different positions on the longitudinal side of the post (1) during their assembly on the longitudinal side of the post (1), which positions represent different rotational positions of the respective bearing body (2) in the plane of the longitudinal side about an axis of rotation (X) extending perpendicularly to this plane and within the bearing body (2),
wherein the bearing bodies (2) are each secured or can be secured against a rotation about the axis of rotation (X) in one of these positions in a form-locking and/or force-locking manner,
and wherein, viewed in the direction of the respective axis of rotation (X), the circumferential boundaries of the bearing bodies (2) each form, over at least one third of the circumferential extent, a limit stop region (S) for butting against the inner boundaries (5) of a hollow crossbar profile (4) to be secured to the post (1), wherein in this limit stop regions (S) the distance of the circumferential boundaries from the axis of rotation (X) increases as viewed in a first circumferential direction (R), **characterized in that**
the axes of rotation (X) of the bearing bodies (2), as viewed in the direction perpendicular to the longitudinal side of the post (1), run through the corners of a polygon, in particular of a triangle or of a rectangle, and wherein the bearing bodies (2) are positioned in such a way that all the bearing bodies (2) project beyond the boundaries of this polygon with at least a part of their limit stop region (S),
wherein all bearing bodies (2) have an identical maximum projection of their limit stop region (S) over the boundaries of the polygon
and wherein on each side of the polygon exactly one bearing body (2) protrudes over this side with the maximum projection with its limit stop region (S) .

2. Post (1) according to claim 1 wherein the bearing bodies (2) are designed in such a way that the limit stop region (S) forms a limit stop surface (F) which is curved in the circumferential direction, which in the first circumferential direction (R) moves steplessly increasingly away from the axis of rotation (X) .

3. Post (1) according to claim 1 wherein the bearing bodies (2) are designed in such a way that the limit stop region (S) forms a plurality of flat limit stop surfaces (F1-F6) which follow one another in the first circumferential direction (R) and which distance from the axis of rotation (X) increases stepwise in the first circumferential direction (R) from limit stop surface to limit stop surface, in particular in uniform steps.

4. Post (1) according to claim 3 wherein the bearing bodies (2) are designed in such a way that there is for each limit stop surface a perpendicular (Z) to the plane of each surface (F1; F2; F3; F4; F5; F6), which runs through both the axis of rotation (X) and through this limit stop surface (F1; F2; F3; F4; F5; F6), in particular in such a way that this perpendicular (Z) has a distance to the two circumferential boundaries of the respective limit stop surface (F1; F2; F3; F4; F5; F6) which is greater than one fifth of the circumferential extent of this limit stop surface (F1; F2; F3; F4; F5; F6) .

5. Post (1) according to one of the preceding claims wherein the bearing bodies (2) are identical, and in particular wherein the load introduction elements (3) are identical.

6. Post (1) according to one of the preceding claims wherein the bearing bodies (2) are designed as cylinders or as prisms, and in particular wherein these are produced by cutting them to length from a corresponding solid profile material.

7. Post (1) according to one of the preceding claims wherein the load introduction elements (3) are formed by fastening screws (3) which are each fixed to the longitudinal side of the post (1), in particular are screwed into the longitudinal side of the post (1), and at least partially penetrate the respective bearing body (2) .

8. Post (1) according to claim 7 wherein the fastening screws (3) each produce a form-lock in the direction pointing vertically away from the longitudinal side of the post (1) between the post (1) and the respective bearing body (2).

9. Post (1) according to claim 8 wherein the fastening screws (3) each effect a force-locking fixation of the bearing body (2) in the respective position against a rotation about the axis of rotation (X).

10. Post according to one of the claims 1 to 6 wherein the load introduction elements are formed by projections on the bearing bodies, which each penetrate into associated holes in the longitudinal side of the post.

11. Post according to claim 10 wherein the projections are formed in one piece with the bearing bodies, and in particular wherein the bearing bodies are made as cast parts of metal.

12. Post according to one of the preceding claims wherein the bearing bodies are each secured in a form-locking manner against a rotation about the axis of rotation, in particular by means of a positioning pin or of a positioning screw which penetrates into the longitudinal side of the post at a distance from the respective axis of rotation.

13. Post according to claim 12 wherein the bearing bodies are each secured with a positioning screw in a form-locking manner against a rotation about the axis of rotation and wherein the positioning screw produces a form-lock between the post and the bearing body in the direction pointing vertically away from the longitudinal side of the post.

14. Post and beam connection between a post (1) according to one of the claims 1 to 13 and a beam (4) of a hollow profile material, in particular abutting at a right angle to the longitudinal side thereof, wherein the bearing bodies (2) of the post (1) penetrate axially into the hollow profile material of the beam (4) and abut with their limit stop regions (S) against the inner boundaries (5) of the hollow profile material.

15. Post and beam connection according to claim 14 wherein the beam (4) is formed from a polygonal closed tubular material with substantially uniform wall thickness and wherein the inner sides of the tubular walls form the inner boundaries (5) of the hollow profile material.

16. Post and beam connection according to claim 15 wherein exactly one bearing body (2) is associated with each side wall of the polygonal tube cross section, which bearing body (2) abuts with its limit stop region (S) exclusively the inner side (5) of this side wall region.

17. Post and beam connection according to claim 16 wherein for all bearing bodies (2) the distance between the respective axis of rotation (X) and the inner side (5) of the respective side wall is identical.

18. Post and beam connection according to one of the claims 16 to 17 wherein the bearing bodies (2) are arranged in the area of the corners of the polygonal tube cross-section.

19. Post and beam connection according to one of the claims 14 to 18, further comprising a locking pin arrangement (8) which is fixed together with at least one of the bearing bodies (2) on the longitudinal side of the post (1) and which is arranged within the internal boundaries of the hollow profile material and with a locking pin (9) which is engaged in an outwardly open radial bore (10) in the hollow profile material of the beam (4), for in a form-locking manner securing of the post and beam connection against an unintentional removal of the connection by an axial movement of the beam (4) away from the post (1).

20. A building facade, in particular a building glass facade, with a supporting structure of posts (1) and beams (4), comprising a post and beam connection according to one of the claims 14 to 19.

21. A method for producing a post (1) according to one of the claims 1 to 13, comprising the steps:
a) providing of a post (1);
b) providing of a plurality of, in particular identical, bearing bodies (2) comprising a base body (6) designed as a cylinder or a prism with a bearing bore (7) penetrating the base body (6) or extending through the base body (6) parallel to its longitudinal axis,
wherein, viewed in the direction of the longitudinal axis of the base body (6), the circumferential boundaries of the base body (6) form a limit stop region (S) over at least one third of the circumferential extent, in which the distance of the circumferential boundaries to the axis (X) of the bearing bore (7) increases as viewed in a first circumferential direction (R),
c) providing of bearing bolts (3) for the fixation the bearing bodies (2) on a longitudinal side of the post (1);
d) introducing of fixation holes for receiving the bearing bolts (3) in a longitudinal side of the post (1), in particular using a drilling template, in such a way that the centers of the fixation holes run through the corners of a polygon, in particular a triangle or a rectangle, as viewed in the direction perpendicular to the longitudinal side of the post (1);
e) arranging and aligning the bearing bodies (2) each in such a way that on the longitudinal side of the post (1), in particular using an alignment template, that their bearing bore (7) is aligned with one of the fixation bores that these each have a desired rotational alignment with respect to the axis of this fixation bore that all bearing bodies (2) project with at least a part of their limit stop region (S) beyond the boundaries of the aforementioned polygon, and that all bearing bodies (2) have an identical maximum projection of their limit stop region (S) beyond the boundaries of the polygon, wherein on each side of the polygon exactly one bearing body (2) projects beyond this side with the maximum projection with its limit stop region (S), and
f) fixating of the bearing bodies (2) in the aligned position by means of the bearing bolts (3) on the longitudinal side of the post (1) each in such a way that the bearing bore (7) of the bearing body (2) is penetrated by one of the bearing bolts (3) and that this bearing bolt (3) is fixated in one of the fixation holes in the longitudinal side of the post (1).

22. Method according to claim 21,
wherein bearing bodies (2) are provided, which comprise a base body (6) designed as a cylinder or a prism with a bearing bore (7) penetrating the base body (6) or extending through the base body (6) parallel to its longitudinal axis,
wherein, viewed in the direction of the longitudinal axis of the base body (6), the circumferential boundaries of the base body (6) form a limit stop region (S) over at least one third of the circumferential extent, in which the distance of the circumferential boundaries to the axis (X) of the bearing bore (7) increases as viewed in a first circumferential direction (R),
wherein the bearing body (2) is designed in such a way that the limit stop region (S) forms a plurality of flat limit stop surfaces (F1-F6) which follow one another in the first circumferential direction (R) and which distance from the axis of rotation (X) increases stepwise in the first circumferential direction (R) from limit stop surface to limit stop surface, in particular in uniform steps,
and wherein the bearing body (2) is designed in such a way that there is for each limit stop surface a perpendicular (Z) to the plane of each surface (F1; F2; F3; F4; F5; F6), which runs through both the axis of rotation (X) of the bearing bore (7) and through this limit stop surface (F1; F2; F3; F4; F5; F6), in particular in such a way that this perpendicular (Z) has a distance to the two circumferential boundaries of the respective limit stop surface (F1; F2; F3; F4; F5; F6) which is greater than one fifth of the circumferential extent of this limit stop surface (F1; F2; F3; F4; F5; F6),
and in particular wherein the bearing bodies (2) are secured exclusively in a force-locking manner by means of the bearing bolt (3) which penetrates through them against a rotation about the axis (X) of this bearing bolt (3).

23. Method according to claim 21,
wherein bearing bodies (2) are provided, which comprise a base body (6) designed as a cylinder or a prism with a bearing bore (7) penetrating the base body (6) or extending through the base body (6) parallel to its longitudinal axis,
wherein, viewed in the direction of the longitudinal axis of the base body (6), the circumferential boundaries of the base body (6) form a limit stop region (S) over at least one third of the circumferential extent, in which the distance of the circumferential boundaries to the axis (X) of the bearing bore (7) increases as viewed in a first circumferential direction (R),
and wherein the bearing body (2) is designed in such a way that the limit stop region (S) forms a limit stop surface (F) which is curved in the circumferential direction, which in the first circumferential direction (R) moves steplessly increasingly away from the axis of rotation (X),
and in particular wherein the bearing bodies (2) are each secured in a form-locking manner against a rotation about the axis (X) of the bearing bolt (3) penetrating through them, in particular by means of a positioning pin or a positioning screw which penetrates or passes through the bearing body (2) parallel to the axis (X) of the bearing bolt (3) and penetrates the longitudinal side of the post (1).

24. Method according to claim 23 wherein the positioning pin or the positioning screw is each arranged in a position-securing bore in the longitudinal side of the post (1), which was previously introduced into the longitudinal side of the post (1), in particular when introducing the fixation bores for the bearing bolts (3), in particular using a drilling template which is also used for introducing the fixation bores.

## Revendications

1. Poteau (1) pour une construction à poteaux et à poutres, comprenant une pluralité de corps porteurs (2) fixés à un côté longitudinal du poteau (1) et faisant saillie à partir de celui-ci,
dans lequel les corps porteurs (2) sont formés séparément du poteau (1) et sont reliés au poteau (1) par un élément d'introduction de charge (3) associé, par complémentarité de forme dans toutes les directions dans un plan dans lequel s'étend le côté longitudinal du poteau (1), pour la transmission des charges porteurs agissant le long de ce plan du corps porteurs (2) respectif au poteau (1),
les éléments d'introduction de charge (3) étant chacun conçus de telle sorte que les corps porteurs (2), avec l'élément d'introduction de charge (3) qui leur est associé, peuvent être disposés au choix sur le côté longitudinal du poteau (1) dans différentes positions sur le côté longitudinal du poteau (1) lorsqu'ils sont montés sur le côté longitudinal du poteau (1), lesquelles positions représentent différentes positions de torsion du corps porteur (2) respectif dans le plan du côté longitudinal autour d'un axe de torsion (X) s'étendant perpendiculairement à ce plan et à l'intérieur du corps porteur (2),
les corps porteurs (2) étant chacun fixés par une liaison positive et/ou par force ou pouvant être fixés dans l'une de ces positions contre la torsion autour de l'axe de torsion (X),
et dans lequel, vues dans la direction de l'axe de torsion respective (X), les limites circonférentielles des corps porteurs (2) forment chacune, sur au moins un tiers de l'étendue circonférentielle, une zone de butée (S) pour frapper contre les limites intérieures (5) d'un profilé en barre creuse (4) à fixer sur le poteau (1), la distance des limites circonférentielles par rapport à l'axe de torsion (X), vue dans une première direction circonférentielle (R), augmentant dans cette zone de butée (S), **caractérisé en ce que**
les axes de torsion (X) des corps porteurs (2), vu dans la direction perpendiculaire au côté longitudinal du poteau (1), passent par les coins d'un polygone, en particulier d'un triangle ou d'un rectangle, et les corps porteurs (2) étant positionnés de telle manière que tous les corps porteurs (2) dépassent, avec au moins une partie de leur zone de butée (S), les limites de ce polygone,
tous les corps porteurs (2) ayant une saille maximale identique de leur zone de butée (S) au-delà des limites du polygone,
de chaque côté du polygone, exactement un corps porteur (2) dépassant avec sa zone de butée (S) de ce côté avec la saillie maximale.

2. Poteau (1) selon la revendication 1, dans lequel les corps porteurs (2) sont formés de telle manière que la zone de butée (S) forme une surface de butée (F) qui est incurvée dans la direction circonférentielle et qui s'éloigne de l'axe de torsion (X) de manière continuellement croissante, vu dans la première direction circonférentielle (R).

3. Poteau (1) selon la revendication 1, dans lequel les corps porteurs (2) sont conçus de telle manière que la zone de butée (S) forme une pluralité de surfaces de butée planes (F1-F6) qui se succèdent dans la première direction circonférentielle (R) et dont la distance par rapport à l'axe de torsion (X) augmente graduellement dans la première direction circonférentielle (R) d'une surface de butée à l'autre, en particulier en échelons réguliers.

4. Poteau (1) selon la revendication 3, dans lequel les corps porteurs (2) sont formés de telle sorte que, pour chaque surface de butée (F1-F6), il existe une perpendiculaire (Z) au plan de cette surface (F1; F2; F3; F4; F5; F6), qui est définie à la fois par l'axe de torsion (X) et par cette surface de butée (F1; F2; F3; F4; F5; F6), en particulier de telle manière que cette perpendiculaire (Z) se trouve à une distance des deux limites circonférentielles de la surface de butée respective (F1; F2; F3; F4; F5; F6) supérieure à un cinquième de l'étendue circonférentielle de cette surface de butée (F1; F2; F3; F4; F5; F6).

5. Poteau (1) selon l'une des revendications précédentes, les corps porteurs (2) étant identiques, et en particulier, les éléments d'introduction de charge (3) étant identiques.

6. Poteau (1) selon l'une des revendications précédentes, les corps porteurs (2) étant conçus comme des cylindres ou des prismes, et en particulier, ceux-ci étant produits en les coupant à longueur à partir d'un matériau profilé solide approprié.

7. Poteau (1) selon l'une des revendications précédentes, dans lequel les éléments d'introduction de charge (3) sont formés par des vis de fixation (3) qui sont chacune fixées sur le côté longitudinal du poteau (1), en particulier vissées dans le côté longitudinal du poteau (1), et qui pénètrent au moins partiellement dans le corps porteur (2) respectif.

8. Poteau (1) selon la revendication 7, les vis de fixation (3) produisant chacune un engagement positif entre le poteau (1) et le corps porteur (2) respectif dans la direction s'éloignant verticalement du côté longitudinal du poteau (1).

9. Poteau (1) selon la revendication 8, dans lequel les vis de fixation (3) assurent chacune une fixation par force du corps porteur (2) dans la position respective contre une torsion autour de l'axe de torsion (X) .

10. Poteau selon l'une des revendications 1 à 6, dans lequel les éléments d'introduction de charge sont formés par des saillies sur les corps porteurs qui pénètrent chacun dans des alésages associés dans le côté longitudinal du poteau.

11. Poteau selon la revendication 10, dans lequel les saillies sont formées d'une seule pièce avec les corps porteurs, et en particulier, dans lequel les corps porteurs sont fabriqués en tant que pièces coulées en métal.

12. Poteaux selon l'une des revendications précédentes, dans lequel les corps porteurs sont chacun bloqués par engagement positif contre toute torsion autour de l'axe de torsion, en particulier au moyen d'une broche de positionnement ou d'une vis de positionnement qui pénètre dans le côté longitudinal du poteau à distance de l'axe de torsion respectif.

13. Poteau selon la revendication 12, dans lequel les corps porteurs sont chacun fixés par une vis de positionnement de manière à empêcher la torsion autour de l'axe de torsion et dans lequel la vis de positionnement produit un engagement positif dans la direction s'éloignant verticalement du côté longitudinal du poteau entre le poteau et le corps porteur.

14. Couplage poteaux-poutres entre un poteau (1) selon l'une des revendications 1 à 13 et une poutre (4) en matériau profilé creux, qui s'appuie en particulier à angle droit sur son côté longitudinal, les corps porteurs (2) du poteau (1) pénétrant axialement dans le matériau profilé creux de la poutre (4) et s'appuyant avec leurs zones de butée (S) sur les faces intérieures (5) du matériau profilé creux.

15. Couplage poteaux-poutres selon la revendication 14, dans lequel la poutre (4) est formée d'un matériau tubulaire polygonal fermé avec une épaisseur de paroi sensiblement uniforme et dans lequel les côtés intérieurs des parois tubulaires forment les faces intérieures (5) du matériau du profilé creux.

16. Couplage poteaux-poutres selon la revendication 15, dans lequel à chaque paroi latérale de la section transversale du tube polygonal est associé exactement un corps porteur (2), lequel corps porteur (2) se raccorde avec sa zone de butée (S) exclusivement au côté intérieur (5) de cette zone de paroi latérale.

17. Couplage poteaux-poutres selon la revendication 16, dans lequel, pour tous les corps porteurs (2), la distance entre l'axe de torsion respectif (X) et la face intérieure (5) de la paroi latérale respective est identique.

18. Couplage poteaux-poutres selon l'une des revendications 16 à 17, dans lequel les corps porteurs (2) sont disposés dans la zone des angles de la section transversale du tube polygonal.

19. Couplage poteaux-poutres selon l'une des revendications 14 à 18, comprenant en outre un agencement de goupilles de verrouillage (8, 9) fixé avec au moins un des corps porteurs (2) sur le côté longitudinal du poteau (1) et disposé à l'intérieur des limites internes du matériau du profilé creux, avec une goupille de verrouillage (9), qui est engagée dans un alésage radial (10) ouvert vers l'extérieur dans le matériau profilé creux de la poutre (4), pour la sécurisation positive de la liaison poteau-poutre contre l'annulation involontaire de la liaison par un mouvement axial de la poutre (4) s'éloignant du poteau (1).

20. Façade de bâtiment, en particulier façade en verre de bâtiment, avec une structure porteuse de poteaux (1) et de poutres (4), comprenant un couplage poteaux-poutres selon l'une des revendications 14 à 19.

21. Procédé de fabrication d'un poteau (1) selon l'une des revendications 1 à 13, comprenant les étapes :
a) prévoir un poste (1) ;
b) prévoir une pluralité de corps porteurs (2), en particulier identiques, comprenant un corps de base (6) conçu comme un cylindre ou une prisme, avec un alésage porteurs (7) faisant saille dans le corps de base (6) parallèlement à son axe longitudinal ou traversant le corps de base (6) ;
les limites circonférentielles du corps de base (6) formant une zone de butée (S), vu en direction de l'axe longitudinal du corps de base (6), s'étendant dans au moins un tiers de l'élongation circonférentielle, dans laquelle zone de butée la distance des limites circonférentielles à l'axe (X) de l'alésage porteurs (7) augmente, vu dans une première direction circonférentielle (R),
c) prévoir de boulons porteurs (3) pour la fixation des corps porteurs (2) sur un côté longitudinal du poteau (1) ;
d) introduire des trous de fixation destinés à recevoir les boulons porteurs (3) dans un côté longitudinal du poteau (1), en particulier en utilisant un modèle de perçage, de telle sorte que les centres des trous de fixation, vu dans la direction perpendiculaire au côté longitudinal du poteau (1), passent par les coins d'un polygone, en particulier d'un triangle ou d'un rectangle ;
e) disposer et aligner les corps porteurs (2) respectivement sur le côté longitudinal du poteau (1), en particulier en utilisant un modèle d'alignement, de telle sorte que leur alésage porteurs (7) soit aligné avec l'un des alésages de fixation et que ceux-ci présentent chacun un alignement en rotation souhaité par rapport à l'axe de cet alésage de fixation, tous les corps porteurs (2) faisant saille au moins avec une partie de leur zone de butée (S) au-delà des limites du polygone susmentionné et tous les corps porteurs (2) ayant une saille maximale de leurs zones de butée (S) identique au-delà des limites du polygone, de chaque côté du polygone précisément un corps porteur (2) faisant saille au-delà de ce côté, et
f) fixer des corps porteurs (2) en position alignée au moyen des boulons porteurs (3) sur le côté longitudinal du poteau (1) de telle sorte que l'un des boulons porteurs (3) passe à travers l'alésage porteurs (7) du corps porteur (2) et que ce boulon porteur (3) soit fixé dans l'un des alésages de fixation sur le côté longitudinal du poteau (1).

22. Procédé selon la revendication 21, dans lequel des corps porteurs (2) sont prévus, comprenant un corps de base (6) conçu comme un cylindre ou une prisme, avec un alésage porteurs (7) faisant saille dans le corps de base (6) parallèlement à son axe longitudinal ou traversant le corps de base (6),
dans lequel, vu en direction de l'axe longitudinal du corps de base (6), les limites circonférentielles du corps de base (6) forment une zone de butée (S) s'étendant au moins un tiers de l'extension circonférentielle, dans laquelle zone de butée la distance des limites circonférentielles de l'axe (X) de l'alésage porteurs (7) augmente, vu en une première direction (R),
le corps porteur (2) étant adapté de telle sorte que la zone de butée (S) forme une pluralité de surfaces de butée planes (F1-F6) qui se succèdent dans la première direction circonférentielle (R) et dont la distance par rapport à l'axe (X) de l'alésage porteurs augmente graduellement dans la première direction circonférentielle (R) d'une surface de butée à l'autre, en particulier en échelons réguliers,
dans lequel le corps porteur (2) est adapté de telle sorte que pour chaque surface de butée (F1-F6) il existe une perpendiculaire (Z) au plan de cette surface (F1; F2; F3; F4; F5; F6), qui est définie à la fois par l'axe (X) de l'alésage porteurs (7) et par cette surface de butée (F1; F2; F3; F4; F5; F6), en particulier de telle manière que cette perpendiculaire (Z) se trouve à une distance des deux limites circonférentielles de la surface de butée respective (F1; F2; F3; F4; F5; F6) supérieure à un cinquième de l'étendue circonférentielle de cette surface de butée (F1; F2; F3; F4; F5; F6),
et en particulier dans lequel les corps d'alésage sont sécurisés contre la torsion autour de l'axe (X) du boulon porteur (3) exclusivement par force au moyen de ce boulon porteur (3) qui les traverse.

23. Procédé selon la revendication 21, dans lequel des corps porteurs (2) sont prévus, comprenant un corps de base (6) conçu comme un cylindre ou une prisme, avec un alésage porteurs (7) faisant saille dans le corps de base (6) parallèlement à son axe longitudinal ou traversant le corps de base (6),
dans lequel, vu en direction de l'axe longitudinal du corps de base (6), les limites circonférentielles du corps de base (6) forment une zone de butée (S) s'étendant au moins un tiers de l'extension circonférentielle, dans laquelle zone de butée la distance des limites circonférentielles de l'axe (X) de l'alésage porteurs (7) augmente, vu en une première direction (R),
et dans lequel le corps porteur (2) est adapté de telle sorte que la zone de butée (S) forme une surface de butée plane (F) qui s'éloigne dans la première direction circonférentielle (R) continument augmentant de l'axe (X) de l'alésage porteurs (7),
et en particulier dans lequel les corps porteurs (2) sont chacun bloqués par engagement positif contre toute torsion autour de l'axe (X) du boulon porteur (3) qui les traverse, en particulier au moyen d'une broche ou d'une vis de positionnement qui pénètre ou traverse le corps porteur (2) parallèlement à l'axe (X) de la broche porteurs (3) et pénètre dans le côté longitudinal du poteau (1).

24. Procédé selon la revendication 23, dans lequel la broche de positionnement ou la vis de positionnement est disposée dans un alésage de fixation de position dans le côté longitudinal du poteau (1), qui a été préalablement introduit dans le côté longitudinal du poteau (1), en particulier lors de l'introduction des alésages de fixation pour les boulons porteurs (3), en particulier en utilisant un modèle de perçage qui est également utilisé pour l'introduction des alésages de fixation.
